(19) **Europäisches Patentamt** / **European Patent Office** / **Office européen des brevets**

(11) **EP 4 202 642 B1**

(12) **EUROPEAN PATENT SPECIFICATION**

(45) Date of publication and mention
of the grant of the patent:
**12.11.2025   Bulletin 2025/46**

(21) Application number: **22189357.1**

(22) Date of filing: **09.08.2022**

(51) International Patent Classification (IPC):
**G06F 8/10** *(2018.01)*

(52) Cooperative Patent Classification (CPC):
**G06F 8/10**

(54) **METHOD AND SYSTEM FOR FEATURE SPECIFICATION AND DEPENDENCY INFORMATION EXTRACTION FROM REQUIREMENT SPECIFICATION DOCUMENTS**

VERFAHREN UND SYSTEM ZUR MERKMALSPEZIFIKATION UND ABHÄNGIGKEITSINFORMATIONSEXTRAKTION AUS ANFORDERUNGSSPEZIFIKATIONSDOKUMENTEN

PROCÉDÉ ET SYSTÈME DE SPÉCIFICATION DE CARACTÉRISTIQUES ET D'EXTRACTION D'INFORMATIONS DE DÉPENDANCE À PARTIR DE DOCUMENTS DE SPÉCIFICATION D'EXIGENCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2021   IN 202121059937**

(43) Date of publication of application:
**28.06.2023   Bulletin 2023/26**

(73) Proprietor: **Tata Consultancy Services Limited**
**Maharashtra (IN)**

(72) Inventors:
 • **RAJBHOJ, ASHA SUSHILKUMAR**
   **411013 Pune, Maharashtra (IN)**
 • **NISTALA, PADMALATA VENKATA**
   **500034 Hyderabad, Telangana (IN)**
 • **SONI, SHIVANI**
   **411013 Pune, Maharashtra (IN)**
 • **KULKARNI, VINAY**
   **411913 Pune, Maharashtra (IN)**
 • **PATHAN, AJIM**
   **411013 Pune, Maharashtra (IN)**

(74) Representative: **Goddar, Heinz J. et al**
**Boehmert & Boehmert**
**Anwaltspartnerschaft mbB**
**Pettenkoferstrasse 22**
**80336 München (DE)**

(56) References cited:
 • **NILI ITZIK ET AL: "Generating feature models from requirements", 20140915; 1077952576 - 1077952576, 15 September 2014 (2014-09-15), pages 44 - 51, XP058056783, ISBN: 978-1-4503-2739-8, DOI: 10.1145/ 2647908.2655966**
 • **ANJALI SREE-KUMAR ET AL: "Extracting software product line feature models from natural language specifications", SYSTEMS AND SOFTWARE PRODUCT LINE, ACM, 2 PENN PLAZA, SUITE 701NEW YORKNY10121-0701USA, 10 September 2018 (2018-09-10), pages 43 - 53, XP058414935, ISBN: 978-1-4503-6464-5, DOI: 10.1145/ 3233027.3233029**
 • **JAVED MUHAMMAD ET AL: "iMER: Iterative process of entity relationship and business process model extraction from the requirements", INFORMATION AND SOFTWARE TECHNOLOGY, ELSEVIER, AMSTERDAM, NL, vol. 135, 27 February 2021 (2021-02-27), XP086544300, ISSN: 0950-5849, [retrieved on 20210227], DOI: 10.1016/J.INFSOF.2021.106558**

**Description**

CROSS-REFERENCE TO RELATED APPLICATIONS AND PRIORITY

The present application claims priority to Indian application no. 202121059937, filed on December 22, 2021.

TECHNICAL FIELD

The disclosure herein generally relates to the field of Natural language Processing (NLP) and, more particularly, to a method and system for feature specification and dependency extraction from requirement specification documents.

BACKGROUND

In large-scale application development process, Software Development Life Cycle (SDLC) plays an important role. In SDLC, requirement extraction is the first step and generally, requirement specification is documented in Natural Language. For any new requirements from users, business analysts have to refer to these requirement specification documents for impact analysis and to come up with a functional solution. Knowledge of the product, functional dependencies, and so on is scattered over multiple functional documents. Many times there also exists inconsistencies across these specification documents due to human errors that complicate the business analysts' jobs. Hence a digitized requirement specification modeling is vital throughout the SDLC process.

Conventional methods such as Unified Modeling Language (UML), Business Process Model and Business Process Model and Notation (BPMN), Feature Modeling, and the like addresses a specific view and not the holistic view of the system evolution with interconnections. Also, specifying these models for large-scale product development is a tedious, time and effort consuming activity. As a result, in practice, instead of using modeling-based approaches, various product specifications documents are created as a part of requirements elicitation. These documents are maintained in diverse formats and created over many years making the requirement process manual, document-centric and SME-dependent. Hence there is a challenge in developing a holistic model for feature specification and dependency representation.

NILI ITZIK ET AL, "Generating feature models from requirements", 20140915; 1077952576 - 1077952576, (2014-09-15), pages 44-51, discloses SPLE techniques that measure the semantic similarity, extracts variability, and automatically generates feature models that represent structural (objects-related) or functional (actions-related) perspectives.

ANJALI SREE-KUMAR ET AL: "Extracting software product line feature models from natural language specifications", SYSTEMS AND SOFTWARE PRODUCT LINE, ACM, 2 PENN PLAZA, SUITE 701 NEW YORKNY10121 -0701 USA, 10 September 2018 (2018-09-10), pages 43-53, discloses a framework for feature and relationship extraction, which overcomes the identified limitations and is built upon state-of-the-art open-source NLP tools.

JAVED MUHAMMAD ET AL: "iMER: Iterative process of entity relationship and business process model extraction from the requirements", INFORMATION AND SOFTWARE TECHNOLOGY, ELSEVIER, AMSTERDAM, NL, vol. 135, 27 February 2021 (2021-02-27), discloses an automated approach to extract the entity relationship and business process models from requirements, which are possibly in different formats such as general requirements, use case specification and user stories.

SUMMARY

Embodiments of the present disclosure present technological improvements as solutions to one or more of the above-mentioned technical problems recognized by the inventors in conventional systems. For example, in one embodiment, a method for feature specification and dependency extraction from requirement specification documents is provided. The method includes receiving, by one or more hardware processors, a plurality of requirement specification documents, a plurality of extraction patterns, and a domain dictionary. Further, the method includes generating, by the one or more hardware processors, a product feature model based on the plurality of requirement specification documents, the plurality of extraction patterns, and the domain dictionary, using a feature model generation technique, wherein the product feature model comprises a plurality of features elements arranged hierarchically, wherein the plurality of product feature elements comprises a feature area, a major feature, and a plurality of features. Furthermore, the method includes generating, by the one or more hardware processors, a specification model for each of the plurality of features associated with the product feature model using a specification extraction technique, wherein the specification model comprises a plurality of specification elements and a plurality of corresponding associations, wherein the plurality of specification elements comprises a plurality of processes, a plurality of activities, a plurality of rulesets, a plurality of rules and a plurality of parameters. Further, the method includes generating, by the one or more hardware processors, a plurality of dependency associations for each of the plurality of specification elements based on the corresponding specification model using a dependency extraction technique. Finally, the method includes updating, by the one or more hardware processors, the plurality of dependency associations in the corresponding specification model.

In another aspect, a system for feature specification and dependency extraction from requirement specification documents is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a plurality of extraction patterns, and a domain dictionary. Further, the one or more hardware processors are configured by the programmed instructions to generate a product feature model based on the plurality of requirement specification documents, the plurality of extraction patterns, and the domain dictionary, using a feature model generation technique, wherein the product feature model comprises a plurality of features elements arranged hierarchically, wherein the plurality of product feature elements comprises a feature area, a major feature, and a plurality of features. Furthermore, the one or more hardware processors are configured by the programmed instructions to generate a specification model for each of the plurality of features associated with the product feature model using a specification extraction technique, wherein the specification model comprises a plurality of specification elements and a plurality of corresponding associations, wherein the plurality of specification elements comprises a plurality of processes, a plurality of activities, a plurality of rulesets, a plurality of rules and a plurality of parameters. Furthermore, the one or more hardware processors are configured by the programmed instructions to generate a plurality of dependency associations for each of the plurality of specification elements based on the corresponding specification model using a dependency extraction technique. Finally, the one or more hardware processors are configured by the programmed instructions to update the plurality of dependency associations in the corresponding specification model.

In yet another aspect, a computer program product including a non-transitory computer-readable medium having embodied therein a computer program for feature specification and dependency extraction from requirement specification documents is provided. The computer readable program, when executed on a computing device, causes the computing device to receive a plurality of extraction patterns, and a domain dictionary. Further, the computer readable program, when executed on a computing device, causes the computing device to generate a product feature model based on the plurality of requirement specification documents, the plurality of extraction patterns, and the domain dictionary, using a feature model generation technique, wherein the product feature model comprises a plurality of features elements arranged hierarchically, wherein the plurality of product feature elements comprises a feature area, a major feature, and a plurality of features. Furthermore, the computer readable program, when executed on a computing device, causes the computing device to generate a specification model for each of the plurality of features associated with the product feature model using a specification extraction technique, wherein the specification model comprises a plurality of specification elements and a plurality of corresponding associations, wherein the plurality of specification elements comprises a plurality of processes, a plurality of activities, a plurality of rulesets, a plurality of rules and a plurality of parameters. Furthermore, the computer readable program, when executed on a computing device, causes the computing device to generate a plurality of dependency associations for each of the plurality of specification elements based on the corresponding specification model using a dependency extraction technique. Finally, the computer readable program, when executed on a computing device, causes the computing device to update the plurality of dependency associations in the corresponding specification model.

It is to be understood that both the foregoing general description and the following detailed description are exemplary and explanatory only and are not restrictive of the invention, which is defined by the appended independent claims, and the dependent claims defining preferred embodiments.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a functional block diagram of a system for feature specification and dependency extraction from requirement specification documents, in accordance with some embodiments of the present disclosure.

FIG. 2 is an exemplary flow diagram illustrating a method for feature specification and dependency extraction from requirement specification documents, implemented by the system of FIG. 1, in accordance with some embodiments of the present disclosure.

FIG. 3 is an example product feature model for the processor implemented method for feature specification and dependency extraction from requirement specification documents implemented by the system of FIG. 1, in accordance with some embodiments of the present disclosure.

FIG. 4 is an exemplary flow diagram for specification model generation for the processor implemented method for feature specification and dependency extraction from requirement specification documents implemented by the system of FIG. 1, in accordance with some embodiments of the present disclosure.

FIGS. 5A and 5B are example feature specification model for the processor implemented method for feature specification and dependency extraction from requirement specification documents implemented by the system of FIG. 1, in accordance with some embodiments of the present disclosure.

FIGS. 6A, 6B and 6C are example dependency associations for the processor implemented method for feature specification and dependency extraction from requirement specification documents implemented by the system of FIG. 1, in accordance with some embodiments of the present disclosure.

FIG. 7 illustrates a functional architecture for the processor implemented method for feature specification and dependency extraction from requirement specification documents implemented by the system of FIG. 1, in accordance with some embodiments of the present disclosure.

FIG. 8 is an example flow diagram for query processing and output report generation for the processor implemented method for feature specification and dependency extraction from requirement specification documents implemented by the system of FIG. 1, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments herein provide a method and system for feature specification and dependency extraction from requirement specification documents. Initially, the system receives a plurality of requirement specification documents, a plurality of extraction patterns and a domain dictionary. Further, a product feature model is generated based on the plurality of requirement specification documents, the plurality of extraction patterns and the domain dictionary using a feature model generation technique. The product feature model includes a plurality of product feature elements arranged hierarchically. The plurality of product feature elements comprises a feature area, a major feature and a plurality of features. A specification model is generated further for each of the plurality of features associated with the product feature model using a specification extraction technique. The specification model includes a plurality of specification elements and a plurality of corresponding associations. The plurality of specification elements includes a plurality of processes, a plurality of activities, a plurality of ruleset, a plurality of rules and a plurality of parameters. Post generating the specification model, a plurality of dependency associations are generated for each of the plurality of specification elements using a dependency extraction technique. Finally, the plurality of dependency associations are updated in the corresponding specification model.

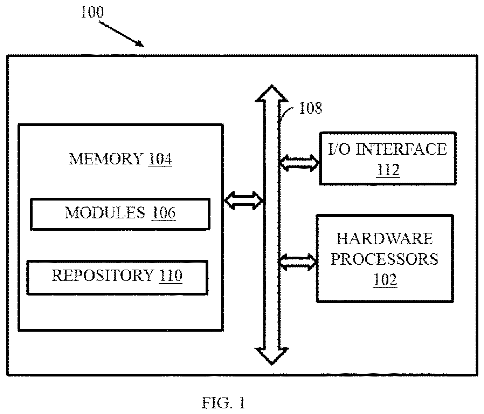

Referring now to the drawings, and more particularly to FIGS. 1 through 8, where similar reference characters denote corresponding features consistently throughout the figures, there are shown preferred embodiments and these embodiments are described in the context of the following exemplary system and/or method.

FIG. 1 is a functional block diagram of a system 100 for feature specification and dependency extraction from requirement specification documents, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

The plurality of modules 106 include programs or coded instructions that supplement applications or functions performed by the system 100 for feature specification and dependency extraction from requirement specification documents. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for feature specification and dependency extraction from requirement specification documents. In an embodiment, plurality of modules 106 includes a product feature model generation module (not shown in FIG. 1), a specification model generation module (not shown in FIG. 1), a dependency association identification module (not shown in FIG. 1) and a dependency association updation module (not shown in FIG. 1).

The data repository (or repository) 110 may include a plurality of abstracted piece of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (not shown in FIG. 1) communicatively coupled to the system 100. The data contained within such external database may be periodically updated. For example, new data may be added into the database (not shown in FIG. 1) and/or existing data may be modified and/or non-useful data may be deleted from the database (not shown in FIG. 1). In one example, the data may be stored in an external system, such as a Lightweight Directory Access Protocol (LDAP) directory and a Relational Database Management System (RDBMS).

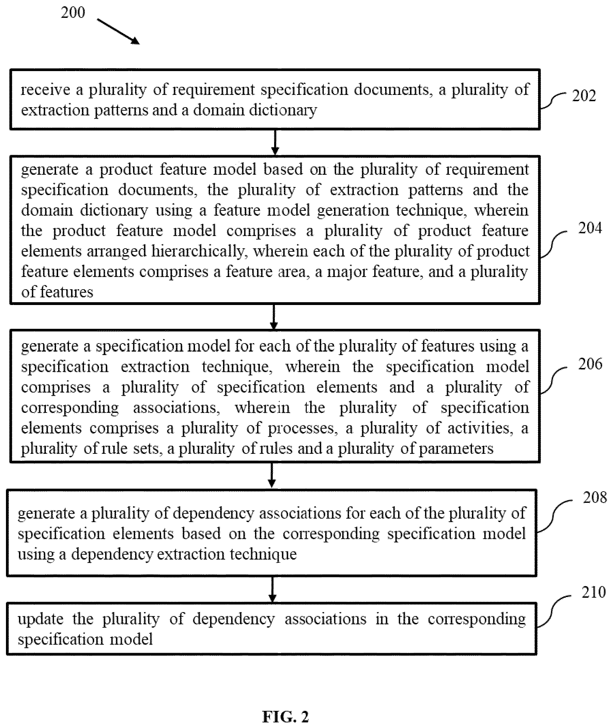

FIG. 2 is an exemplary flow diagram illustrating a method 200 for feature specification and dependency extraction from requirement specification documents implemented by the system of FIG. 1 according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of the method 200 of the present disclosure will now be explained with reference to the components or blocks of the system 100 as depicted in FIG. 1 and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of the method 200, the one or more hardware processors 102 are configured by the programmed instructions to receive a plurality of requirement specification documents, a plurality of extraction patterns and a domain dictionary. The plurality of extraction patterns include a process pattern, an activity pattern, a parameter pattern, a ruleset pattern and a rule pattern. Each of the plurality of extraction patterns includes a corresponding plurality of document formatting styles. For example, Heading style pattern includes Heading1, Heading2, Bold, Underlined and the like. For example, the process pattern includes Heading2 with text "Main Success Scenario" or "Alternate Flow". The activity pattern includes a plurality of Number styled text available after process. For example, "1. Perform ...". The ruleset pattern includes Bold and Underlined text inside Heading2 with name "Business Rules". The rule pattern includes Bullet styled text available after ruleset. The parameter pattern includes Tabular data available after activity. The domain dictionary includes a plurality of taxonomical variations of domain terms. For example, the terms "Business Partner", "Shareholder", "Trader", "Authorized Holder", "Direct participants" refer to the same concept.

At step 204 of the method 200, the one or more hardware processors 102 are configured by the programmed instructions to generate a product feature model based on the plurality of requirement specification documents, the plurality of extraction patterns and the domain dictionary using a feature model generation technique. The product feature model comprises a plurality of product feature elements arranged hierarchically. Each of the plurality of product feature elements are one of, a feature area, a major feature and a plurality of features. In an embodiment, the product feature model is constructed using a Natural Language Processing (NLP) based pattern matching technique. The plurality of

EP 4 202 642 B1

product feature elements are identified using a plurality of corresponding patterns using NLP based pattern matching techniques. In another embodiment, the product feature model is constructed using similar other techniques.

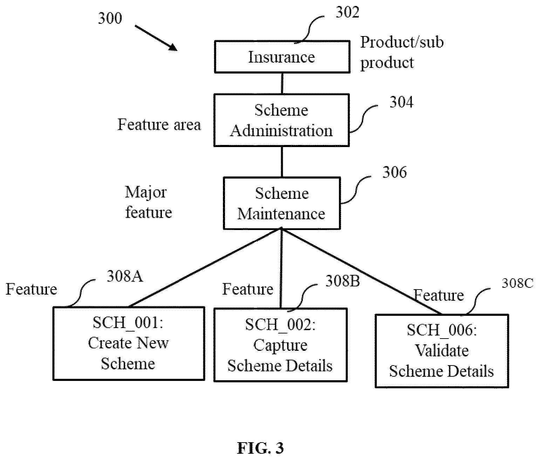

FIG. 3 is an example product feature model for the processor implemented method for feature specification and dependency extraction from requirement specification documents implemented by the system of FIG. 1, in accordance with some embodiments of the present disclosure. Now referring to FIG. 3, the product feature model 300 includes a product or subproduct name "Insurance" 302, a feature area "Scheme Administration" 304, a major feature "Scheme Maintenance" 306 and a plurality of features. The plurality of features includes "SCH_001: Create New Scheme" 308A, "SCH_002: Capture Scheme Details" 308B and "SCH_006: Validate Scheme Details" 308C. The feature type associated with the said plurality of features is an Input Output (IO) function. The other feature types includes an interface, a report and a query. Here "SCH" indicates the feature Scheme.

At step 206 of the method 200, the one or more hardware processors 102 are configured by the programmed instructions to generate a specification model for each of the plurality of features associated with the product feature model using a specification extraction technique. The specification model includes a plurality of specification elements and a plurality of corresponding associations. The plurality of specification elements includes a plurality of processes, a plurality of activities, a plurality of ruleset, a plurality of rules and a plurality of parameters. Each of the plurality of specification elements of the specification model includes a plurality of properties. The plurality of properties includes an ID, a name and a description. For example referring to FIG. 3, the "SCH_001", "SCH_002" and "SCH_006" are ID numbers pertaining to the plurality of feature names "Create New Scheme", "Capture Scheme Details" and "Validate Scheme Details" respectively. For example, the description for the feature "Create New Scheme" is "Create New Scheme will create new scheme for a user through GUI.".

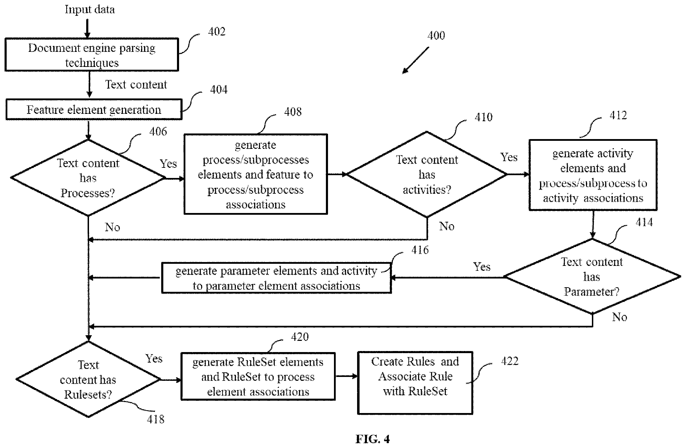

In an embodiment, the method of generating the specification model for each of the plurality of features using the specification extraction technique is explained in conjunction with FIG. 4. FIG. 4 is an exemplary flow diagram for specification model generation for the processor implemented method for feature specification and dependency extraction from requirement specification documents implemented by the system of FIG. 1, in accordance with some embodiments of the present disclosure. Now referring to FIG. 4, the plurality of features and the plurality of requirement specification documents are received as input by the method 400. Further, the plurality of requirement specification documents are parsed at step 402 to obtain a plurality of text content using a document engine parsing techniques. Further, a feature element is generated corresponding to each of the plurality of features at step 404. Further, the plurality of processes and subprocesses are identified based on a comparison between the plurality of text content and the plurality of process patterns at step 406. If no processes or subprocesses are identified, the method 400 searches for rule pattern by transferring the control to the step 418. If the plurality of processes are identified, a plurality of process elements are generated for each of the identified plurality of processes or subprocesses at step 408. Further an association is generated between each of a plurality of feature elements and each of a plurality of corresponding process elements. At step 410, the plurality of text content is checked for a plurality of activities. If the plurality of activities are identified, an activity element corresponding to each of the identified plurality of activities are generated at step 412. Further, an association between each of a plurality of subprocess elements and each of a plurality of corresponding activity elements are generated. If no activities are identified, the method 400 searches for rule pattern by transferring the control to the step 418. At step 414, the text content is checked for a plurality of parameters corresponding to each of the plurality of activities. Here, a comparison is performed between plurality of text content and a plurality of parameter patterns. If the plurality of parameters are identified, a parameter element corresponding to each of a plurality of identified parameters are generated. Further, an association between each of a plurality of activity elements and each of a plurality of corresponding parameter elements are generated. If no parameters are identified, the method 400 searches for rule pattern by transferring the control to the step 418. At step 418, it is checked whether the text content includes a plurality of rulesets based on a comparison between plurality of text content and a plurality of ruleset patterns. If a match is identified, a plurality of ruleset elements corresponding to each of the plurality of rulesets are generated at step 420. Further, an association between each of the plurality of process elements and each of a plurality of corresponding ruleset elements are generated. At step 422, a plurality of rules corresponding to each of the plurality of ruleset are extracted based on a comparison between the plurality of text content and a plurality of rule patterns. Further, a rule element is generated for the plurality of rules and an association between the rule element and the corresponding ruleset element is generated.

At step 208 of the method 200, the one or more hardware processors 102 are configured by the programmed instructions to generate a plurality of dependency associations for each of the plurality of specification elements based on the corresponding specification model using a dependency extraction technique. A dependency association indicates that an element (process or subprocess, ruleset, activity, parameter, rules) instantiates, or uses another element for completing the functionality.

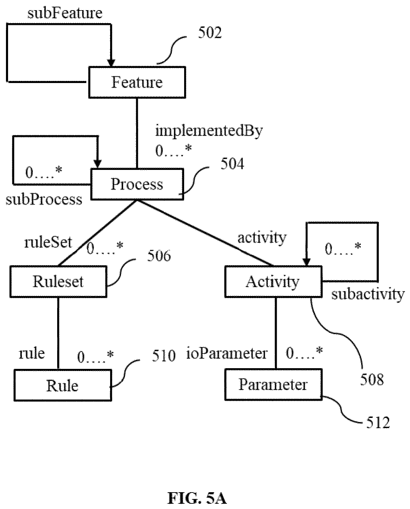

FIG. 5A is a generalized feature specification model for the processor implemented method for feature specification and dependency extraction from requirement specification documents implemented by the system of FIG. 1, in accordance with some embodiments of the present disclosure.

Now referring to FIG. 5A, the specification model comprises a plurality of specification elements including a feature 502, a process 504, a ruleset 506, an activity 508, a rule 510 and a parameter 512. The feature 502 is associated with itself for a subFeature. The feature 502 is associated with the process 504 by an association named "implementedBy". The process 504 has two association, one is with ruleset 506 named "ruleset" and another with the activity 508 named "activity". The process 504 is associated with itself by an association named "subProcess". The activity is associated with itself by an association named "subActivity". The ruleset 506 is associated with the rule 510 by the name "rule". The activity 508 is associated with the parameter 512 by an association named "ioParameter".

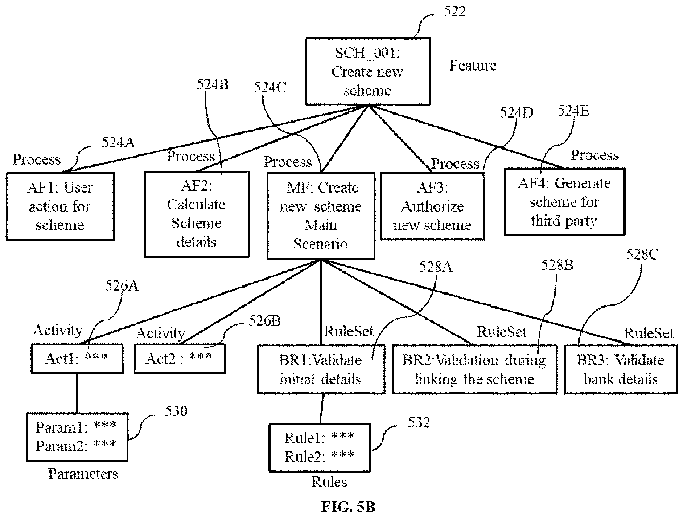

FIG. 5B is an example feature specification model for the feature element "Create new scheme" for the processor implemented method for feature specification and dependency extraction from requirement specification documents implemented by the system of FIG. 1, in accordance with some embodiments of the present disclosure.

Now referring to FIG. 5B, the specification element 522 is holding a feature "Create new scheme". The specification element 522 includes a plurality of processes including "AF1: User action for scheme" 524A, "AF2: Calculate scheme details" 524B, "MF: Create new scheme Main Scenario" 524C, "AF3: Authorize new scheme" 524D, "AF4: Generate scheme for third party" 524E. The process 524C "Create new scheme Main Scenario" includes a plurality of activities including "Act1:***" 526A and "Act2: ***" 526B. The process 524C "Create new scheme Main Scenario" includes a plurality of rulesets including "BR1: Validate initial details" 528A, "BR2: Validation during linking the scheme" 528B and "Validate bank details" 528C. The activity element 526A includes a plurality of parameters represented in the element 530. Further, the ruleset element 528A includes a plurality of rules represented in the specification element 532. Here "AF" indicates Alternate Flow, "MF" indicates Main Flow, "Act" indicates "Activity" and "BR" indicates Business RuleSet. The "Act1:***" of 526A and "Act2:***" of 526B indicates a plurality of corresponding activities of the process 524C. The "Param1:***" and the "Param2:***" of 530 indicates the plurality of parameters associated with the activity 526A. The "Rule1:***" and "Rule1:***" of 532 are the plurality of rules associated with the RuleSet 528A.

The method of generating the plurality of dependency associations for each of the plurality of specification elements based on the corresponding specification model using the dependency extraction technique is explained as follows: Initially, the specification model corresponding to each of the plurality of features is received. Further, a plurality of dependencies associated with each of the plurality of specification elements are identified based on the corresponding description using a dependency searching technique by: (i) preprocessing the description by using a preprocessing technique. The preprocessing involves removal of stop words, root word formation and swapping of dictionary terms with the corresponding common names (ii) obtaining a plurality of split sentences by splitting the preprocessed description using sentence delimiter (Part of Speech) PoS tags (iii) identifying the plurality of dependencies associated with each of the plurality of specification elements based on the plurality of split sentences using a plurality of matching techniques. The plurality of matching techniques includes an ID based exact matching, a name based exact matching, a name based inexact matching and an indirect feature reference matching. Finally, the plurality of dependencies corresponding to each of the plurality of specification elements are updated in the specification model by traversing the specification model. The plurality of dependencies comprises a featureDependsOnFeature dependency, an activityInvokesProcess dependency, an activityInvokesActivity dependency, an activityInvokesRuleSet dependency, ruleInvokesOrocess dependency, ruleInvokesRuleSet dependency, a parameterComputedByProcess dependency, and a parameterValidatedByRuleSet dependency.

The ID based exact matching technique compares the ID associated with each of the plurality of specification elements with the plurality split sentences corresponding to each of the plurality of specification elements. The name based exact matching technique compares the names_associated with each of the plurality of specification elements with the plurality of split sentences corresponding to each of the plurality of specification elements. The name based inexact matching technique compares the name associated with each of the plurality of specification elements with the plurality of split sentences corresponding to each of the plurality of specification elements. However, the name based inexact matching ignores ordering of words associated with the name of the specification element in the preprocessed description. The indirect feature reference matching technique compares the plurality of split sentences corresponding to each of the plurality of specification elements with a plurality of feature referential words. Each of the plurality of referential words comprises a plurality of feature reference patterns. Each of the plurality of feature reference patterns includes a corresponding plurality of referencing styles. For example the plurality of referential words are "previous feature", "section reference" and the like.

In an embodiment, the method of preprocessing is explained as follows: Initially, an input is received. In an embodiment, the input is the plurality of requirement specification documents. Further, a plurality of stop words associated with the plurality of requirement specification documents are removed using a parsing technique. After removing the stop words, a root form for each of a plurality of words associated with the parsed data are obtained using a Natural Language Processing (NLP) technique. A plurality of dictionary terms are identified simultaneously from the parsed data. Finally, each of the plurality of dictionary terms associated with the parsed data are swapped with a corresponding common name using the domain dictionary. For example, the parsed name "Direct participants" is swapped with the corresponding common name "Trader" and the like.

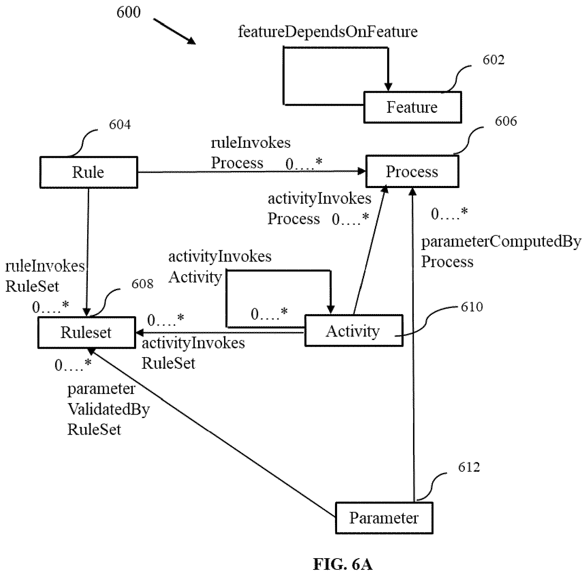

FIG. 6A illustrates example dependency associations for the processor implemented method for feature specification and dependency extraction from requirement specification documents implemented by the system of FIG. 1, in accordance with some embodiments of the present disclosure. Now referring to FIG. 6A, the dependency model 600 includes a feature element 602, a rule element 604, a process element 606, a ruleset element 608, an activity element 610 and a parameter element 612. The dependency association for the feature element 602 to itself is "featureDependsOn-Feature". The rule element 604 is having a dependency association "ruleInvokesProcess" with the process element 606. Further, the rule element 604 is having a dependency association "ruleInvokesRuleSet" with the ruleset element 608. The activity element 610 is having a plurality of dependency associations including "activityInvokesRuleSet" with the ruleset element 608, "activityinvokesActivity" with itself and "activityInvokesProcess" with the process element 606. The parameter element 612 is having a plurality of dependency associations including "parameterValidatedByRuleSet" with the ruleset element 608 and "parameterComputedByProcess" with the process element 606.

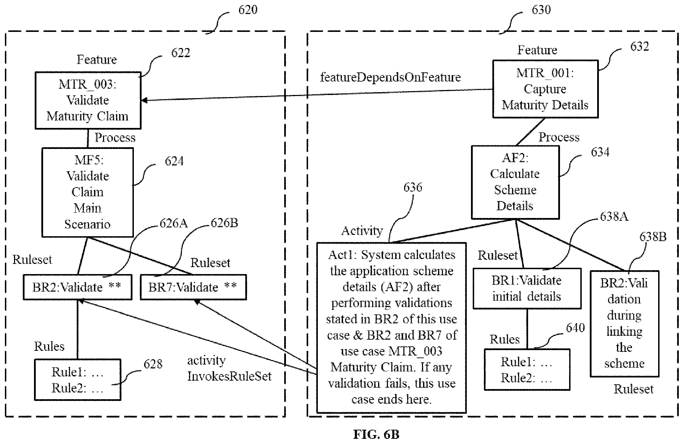

FIG. 6B illustrates example dependency associations for the feature "Capture maturity details" and its corresponding specification model on the feature "Validate maturity claim" and its corresponding specification model for the processor implemented method for feature specification and dependency extraction from requirement specification documents implemented by the system of FIG. 1, in accordance with some embodiments of the present disclosure. Now referring to FIG. 6B, the example includes two specification models 620 for the feature "MTR_003:Validate Maturity Claim" and 630 for the feature "MTR_001:Capture Maturity Details". The specification model 620 includes a feature element "MTR_003:Validate Maturity Claim" 622, a process element "MF5:Validate Claim Main Scenario" 624, a plurality of ruleset elements including "BR2:Validate**" 626A and "BR7:Validate**" 626B. The ruleset "BR2:Validate**" 626A is associated with a plurality of rules element 628. Here, "MTR_003" is the ID for the feature "Validate Maturity Claim". The "MTR_001" is the ID for "Capture Maturity Details". "MF5" is the ID for process "Validate Claim Main Scenario". Similarly, "BR2" and "BR7" are the IDs of Business Ruleset for the process 624.

The specification model 630 of FIG. 6B includes a feature element "MTR_001: Capture Maturity Details" 632, a process element "AF2: Calculate Scheme Details" 634, a plurality of ruleset elements including "BR1: Validate initial details" 638A and "BR2: Validation during linking the scheme" 638B. The ruleset element "BR1:Validate initial details" 638A is associated with a plurality of rule elements 640. The process element "AF2: Calculate Scheme Details" 634 is associated with an activity element 636. The activity element 636 is holding an activity "System calculates the application scheme details after performing validations stated in BR2 and BR7 of the use case MTR_003 Maturity Claim, If any validation fails, this use case ends here". As per activity description text there is reference of feature and also rules of the feature. Hence the feature element "MTR_001: Capture Maturity Details" 632 of the specification model 630 is having a dependency association "featureDependsOnFeature" with the feature element "MTR_003: Validate Maturity Claim" 622 of the dependency model 620 and, the activity element 636 of the specification model 630 is having a dependency associations "activityInvokesRuleSet" with the ruleset elements "BR2:Validate**" 626A and "BR7:Validate**" 626B of the specification model 620.

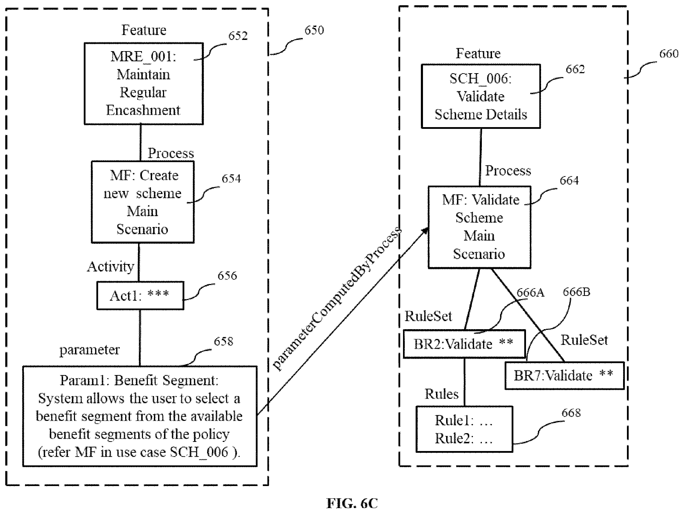

FIG. 6C illustrates example dependency associations between two features or two specification models "Maintain Regular Encashment" and "Validate Scheme Details" for the processor implemented method for feature specification and dependency extraction from requirement specification documents implemented by the system of FIG. 1, in accordance with some embodiments of the present disclosure. Now referring to FIG. 6C, the example includes two specification models 650 for the feature "MRE_001:Maintain Regular Encashments" and 660 for the feature "SCH_006: Validate Scheme Details". The specification model 650 includes a feature element "MRE_001:Maintain Regular Encashments" 652, a process element "MF:Create New Scheme Main Scenario" 654, an activity element 656 and a parameter element " Param1: Benefit segment: System allows user to select a benefit segment from the available benefit segments of the policy". The specification model 660 includes a feature element "SCH_006: Validate Scheme Details" 662, a process element "MF: Validate Scheme Main Scenario" 654, a plurality of ruleset elements including "BR2:Validate**" 666A and "BR7:Validate**" 666B. The ruleset element "BR2:Validate**" 666A is associated with a plurality of rules element 668. Here, the parameter element 658 of the specification model 650 is having a dependency association "parameterComputedByProcess" with the process element "MF: Validate Main Scenario" 664, which means, the parameters element 656 of the specification model 650 is computed by the process 664 of the specification model 660.

At step 210 of the method 200, the one or more hardware processors 102 are configured by the programmed instructions to update the plurality of dependency associations in the corresponding specification model by traversing the specification models.

For example, now referring to the FIG. 6B, the plurality of dependency associations identified by the dependency association extraction technique are "featureDependOnFeature" for the feature 632 on the feature 622. Further, the "activityInvokesRuleSet" is identified for the activity 636 of the specification model 630 and on the Rulesets 626A and 626B of the specification model 620. The extracted dependency associations for a specification model is updated by traversing the corresponding specification model. In this example, there is an identified dependency association "featureDependOnFeature" for the feature 632 of the specification model 630 and on the feature 622 of the specification model 620. Hence an association "featureDependOnFeature" is created between the feature 632 of the specification model 630 and the feature 622. There is an identified dependency association "activityInvokesRuleSet" from the activity 636 of the specification model 630 on the Rulesets 626A and 626B of the specification model 620. Hence the dependency association "activityInvokesRuleSet" is created between 636 of the specification model 630 and the Ruleset 626A of the specification model 620. Similarly, another dependency association "activityInvokesRuleSet" is created between 636 of the specification model 630 and the Ruleset 626B of the specification model 620.

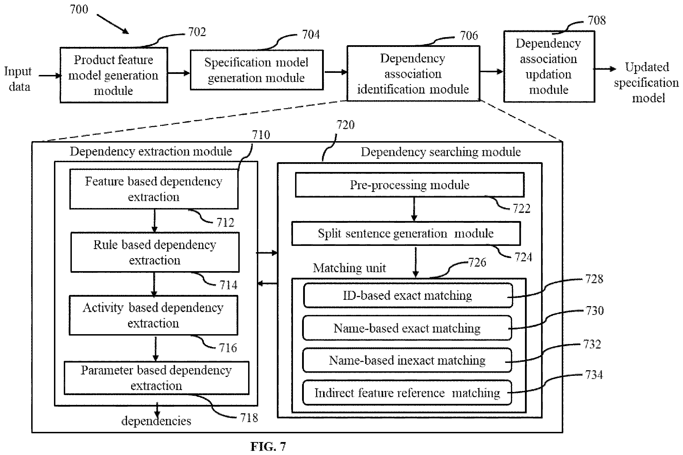

FIG. 7 illustrates a functional architecture for the processor implemented method for feature specification and dependency extraction from requirement specification documents implemented by the system of FIG. 1, in accordance with some embodiments of the present disclosure. Now referring to FIG. 7, the functional architecture 700 includes a product feature model generation module 702, a specification model generation module 704, a dependency association identification module 706 and a dependency association updation module 708. The input data including the plurality of requirement specification documents, the plurality of extraction patterns and the domain dictionary are received initially. The product feature model generation module 702 generates the product feature model. The product feature model includes the plurality of features arranged hierarchically. The plurality of product feature elements comprises a feature area, a major feature and a plurality of features. The specification model generation module 704 generates the specification model for each of the plurality of features associated with the product feature model using the specification extraction technique. The specification model includes the plurality of specification elements and the plurality of corresponding associations. The plurality of specification elements includes the plurality of processes, the plurality of activities, the plurality of rulesets, the plurality of rules and the plurality of parameters. The dependency association identification module 706 generates the plurality of dependency associations for each of the plurality of specification elements based on the corresponding specification model using the dependency extraction technique. The plurality of dependencies associations includes the featureDependsOnFeature dependency, the activityInvokesProcess dependency, the activityInvokesActivity dependency, the activityInvokesRuleSet dependency, the ruleInvokesProcess dependency, the ruleInvokesRuleSet dependency, the parameterComputedByProcess dependency, and the parameterValidatedByRuleSet dependency. The dependency association updation module 708 updates the plurality of dependency associations in the corresponding specification model.

In an embodiment, dependency association identification module 706 of FIG. 7 includes a dependency extraction module 710 and a dependency searching module 720. The dependency extraction module 710 includes a feature based dependency extraction unit 712, a rule based dependency extraction unit 714, an activity based dependency extraction unit 716 and a parameter based dependency extraction unit 718. The feature based dependency extraction unit 712 extracts a plurality of feature based dependencies including featureDependsOnFeature using the dependency searching module 720. The rule based dependency extraction unit 714 extracts a plurality of rule based dependencies including the ruleInvokesProcess dependency and the ruleInvokesRuleSet using the dependency searching module 720. The activity based dependency extraction unit 716 extracts a plurality of activity based dependencies including the activityInvokesProcess dependency, the activityInvokesActivity dependency and the activityInvokesRuleSet using the dependency searching module 720. The parameter based dependency extraction unit 718 extracts a plurality of parameter based dependencies including the parameterComputedByProcess dependency, and the parameterValidatedByRuleSet dependency using the dependency searching module 720.

The dependency search module 720 of FIG. 7 includes a preprocessing module 722, a split sentence generation module 724 and the matching unit 726. The preprocessing module 722 preprocesses the plurality of descriptions corresponding to each of the plurality of specification elements. The split sentence generation module 724 obtaining the plurality of split sentences corresponding to the specification model by splitting the description of each of the plurality of specification elements. The matching unit 726 identifies the plurality of dependencies associated with each of the plurality of specification elements based on the plurality of split sentences using a plurality of matching techniques. The plurality of matching techniques includes the **ID** based exact matching 728, the name based exact matching 730, the name based inexact matching 732 and an indirect feature reference matching 734.

The dependency association updation module 708 of FIG. 7 updates the plurality of dependencies corresponding to each of the plurality of specification elements in the specification model by traversing the specification model.

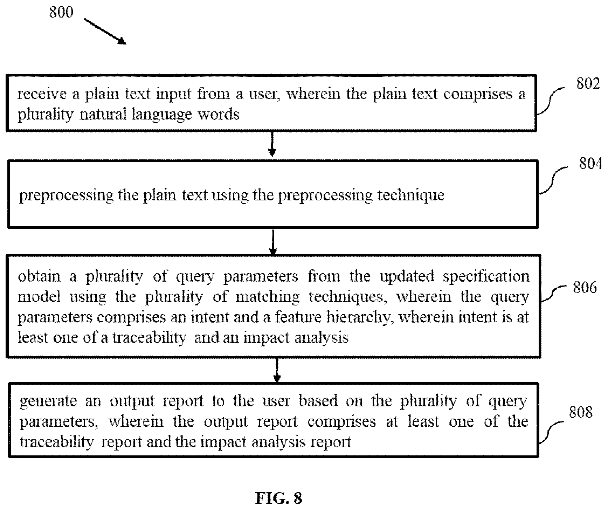

FIG. 8 is an example flow diagram for query processing and output report generation for the processor implemented method for feature specification and dependency extraction from requirement specification documents implemented by the system of FIG. 1, in accordance with some embodiments of the present disclosure.

In an embodiment, the system 100 further comprises generating an output report to the user. Now referring to FIG. 8, at step 802, a plain text input from a user is received. The plain text includes a plurality natural language words. At step 804, the plain text is preprocessed using the document engine parsing technique. At step 806, a plurality of query parameters are obtained from the updated specification model using the plurality of matching techniques. The query parameters includes an intent and a feature hierarchy, wherein intent is at least one of a traceability and an impact analysis. At step 808, the output report to the user is generated based on the plurality of query parameters. The output report includes at least one of the traceability report and the impact analysis report. An example traceability report is shown in table I and an example impact analysis report is shown in table II.

Table I

| Feature Area | feature | Feature Type | Processes | Validation Rulesets | Dependencies |
|---|---|---|---|---|---|
| SCH EME AD MINI STR ATI ON | (SCH_0 01) Create New Scheme | IO Functi on | -(MF) Create New Scheme Main Scenar-io<br><br>-(AF1) User Action for scheme<br>-(AF2) Save initial scheme details<br>-(AF3) Authorize new scheme<br>-(AF4) Gen-erate scheme for third party | -(BR1) Validation initial details ruleset<br><br>-(BR2) Validation during linking the scheme (Number/Category /Policy/-Contributo r Type/Benefit Ruleset<br><br>-(BR3) Validate bank details ruleset<br>-(BR4)Validate complete scheme rule-set | Feature Dependences:<br><br>1. (SCH:006) Validate scheme details<br>Ruleset dependencies:<br><br>1. SCH_006_BR2 2. SCH_006_BR7 |

Now referring to table I, table I shows the traceability report for the feature "Create New Scheme" with ID "SCH_001" of feature area SCHEME ADMINISTRATION. The complete traceability mapping of the feature: feature -> process -> ruleset -> feature dependencies is automatically generated by the system. The feature has five processes, "Create New Scheme Main Scenario" is the main process and others are subprocesses. This feature has five validation rulesets that are invoked from activities. The last column of the Traceability sheet shows different type of dependencies. As shown, the example feature depends on the feature "Validate Scheme Details" with ID "SCH_006" for the BR2 and BR7 rules.

Table II

| |
|---|
| Changing feature details: SCH_006- Validate scheme details Impacted features:<br>1. (IOFunction) SCH_001 - Create new Scheme<br>2. (IOFunction) MRE_001 - Maintain Regular Encashment<br>3. (IOFunction) SCH_007 - Maintain Scheme Details |
| Impacted activities due to SCH_006 process change:<br>1. (Process)SCH_006_AF2=> (Activity) SCH_001_AF1.2 |
| Impacted parameters due to SCH_006 process change:<br>1. (Process)SCH_006_AF4 => (Parameter)MRE_001_Benefit Segment |
| Impacted Activities due to SCH_006 ruleset change:<br>1. (RuleSet)SCH_006_BR2 => (Activity)SCH_001_AF1.2<br>2. (RuleSet)SCH_006_BR7 => (Activity)SCH_001_AF1.2<br>3. (RuleSet)SCH_006_BR7 => (Activity)SCH_007_AF1.2 |

Now referring to table II, table II shows the impact analysis report for the feature 'Validate Scheme Details' with ID 'SCH_006' of feature area SCHEME ADMINISTRATION. Feature change may involve a change of process, activity, or ruleset. Each of these changes results in a direct or indirect impact on other activities or parameters where it is referenced.
In an embodiment, the system 100 has been tested with a sample input and the results of testing is given in table III and table IV. The table III illustrates the name and number of the plurality of feature areas, the feature count, the process count, the activity count, the RuleSet count, the rule count and the parameter count corresponding to each of the plurality of feature areas.

Table III

| Feature Area Name | Feature count | Process count | Activity count | RuleSet count | Rule count | Parameter count |
|---|---|---|---|---|---|---|
| FA1 | 57 | 86 | 489 | 40 | 124 | 1133 |
| FA2 | 104 | 200 | 1368 | 93 | 425 | 2490 |
| FA3 | 158 | 325 | 1623 | 128 | 286 | 2445 |
| FA4 | 25 | 58 | 304 | 28 | 81 | 788 |
| FA5 | 20 | 22 | 81 | 8 | 11 | 59 |
| FA6 | 324 | 648 | 2881 | 264 | 576 | 6772 |
| FA7 | 34 | 38 | 347 | 10 | 12 | 514 |
| | | | | | | |
| Total | 722 | 1377 | 7093 | 571 | 1515 | 14201 |

Table IV illustrates the number of dependency associations extracted by the system 100 for the sample input.

Table IV

| feature Depends On Feature | activity Invokes Process | activity Invokes Activity | activity Invokes RuleSet | rule Invokes Process | rule Invokes RuleSet | parameter Computed ByProcess | parameter Validated ByRuleSet |
|---|---|---|---|---|---|---|---|
| 1128 | 759 | 19 | 77 | 41 | 16 | 115 | 20 |

In an embodiment, the output generated by the system 100 has been validated as explained below: Each element of the specification model is validated for accuracy of extraction, and a score is given on a scale of 0 to 1, 1 being 100% accurate model extraction and 0 being inaccurate extraction. The extraction accuracy of the system 100 is computed using Formulae 1 through 5 and the extraction accuracy of the system 100 is shown in Table V.

$$Activity\ extraction\ accuracy = \frac{\sum(Activity\ Score)}{\sum(Features\ Validated)} \dots\dots\dots\dots\ (1)$$

$$Rules\ extraction\ accuracy = \frac{\sum(Rules\ Score)}{\sum(Features\ Validated)} \dots\dots\dots\dots\ (2)$$

$$Parameter\ extraction\ accuracy = \frac{\sum(Parameter\ Score)}{\sum(Features\ Validated)} \dots\dots\dots\dots\ (3)$$

$$Dependency\ extraction\ accuracy = \frac{\sum Dependency\ Score)}{\sum(Features\ Validated)} \dots\dots\dots\ (4)$$

$$Overall\ extraction\ accuracy =$$
$$Average\begin{pmatrix} Activity\ extraction\ accuracy, \\ Rules\ extraction\ accuracy, \\ Parameter\ extraction\ accuracy, \\ Dependency\ extraction\ accuracy \end{pmatrix} \dots\dots\dots\dots\dots\dots\dots(5)$$

Table V

| Extraction type | Extraction accuracy |
|---|---|
| Processes and Activities | 96% |
| RuleSets and Rules | 99% |
| Parameters | 100% |
| Dependencies | 89% |
| | 96% |

The written description describes the subject matter herein to enable any person skilled in the art to make and use the embodiments. The invention is defined by the appended independent claims. The dependent claims define preferred embodiments.

The embodiments of present disclosure herein address the unresolved problem of automatic extraction of specification model and the dependency model for each feature of the requirement specification document. Further, the present disclosure is capable of generating a traceability report and impact analysis report for any feature. This increases the accuracy and reduces time in software development lifecycle which includes a number of iterations.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), the method comprising:

EP 4 202 642 B1

receiving (202), by one or more hardware processors, a plurality of requirement specification documents, a plurality of extraction patterns, and a domain dictionary;

generating (204), by the one or more hardware processors, a product feature model based on the plurality of requirement specification documents, the plurality of extraction patterns, and the domain dictionary, using a feature model generation technique, wherein the product feature model comprises a plurality of features elements arranged hierarchically, wherein the plurality of product feature elements comprises a feature area, a major feature, and a plurality of features;

generating (206), by the one or more hardware processors, a specification model for each of the plurality of features associated with the product feature model using a specification extraction technique, wherein the specification model comprises a plurality of specification elements and a plurality of corresponding associations, wherein the plurality of specification elements comprises a plurality of processes, a plurality of activities, a plurality of rulesets, a plurality of rules and a plurality of parameters;

identifying, by the one or more hardware processors, a plurality of dependencies associated with each of the plurality of specification elements based on a plurality of split sentences using a plurality of matching techniques, wherein the plurality of matching techniques comprises the ID based exact matching, a name based exact matching, name based inexact matching and an indirect feature reference matching;

updating, by the one or more hardware processors, the plurality of dependencies corresponding to each of the plurality of specification elements in the specification model by traversing the specification model, wherein the ID based exact matching technique compares the ID associated with each of the plurality of specification elements with the plurality of split sentences corresponding to each of the plurality of specification elements, wherein the name based exact matching technique compares the name associated with each of the plurality of specification elements with the plurality of split sentences corresponding to each of the plurality of specification elements by considering the ordering of words, wherein the name based inexact matching technique compares the name associated with each of the plurality of specification elements with the plurality of split sentences corresponding to each of the plurality of specification elements without considering the ordering of words, wherein the indirect feature reference matching technique compares preprocessed description with a plurality of referential words, wherein each of the plurality of referential words comprises a plurality of feature reference patterns and, wherein each of the plurality of feature reference patterns comprises a corresponding plurality of referencing styles, and wherein the name based inexact matching ignores ordering of words associated with the name of the specification element in the preprocessed description, wherein the indirect feature reference matching technique compares the plurality of split sentences corresponding to each of the plurality of specification elements with a plurality of feature referential words; and

generating (208), by the one or more hardware processors, a plurality of dependency associations for each of the plurality of specification elements based on the corresponding specification model using a dependency extraction technique.

2. The processor implemented method of claim 1, wherein the plurality of extraction patterns comprises a process pattern, an activity pattern, a parameter pattern, a ruleset pattern and a rule pattern, wherein each of the plurality of extraction patterns comprises a corresponding plurality of document formatting styles and, wherein the domain dictionary comprises a plurality of taxonomical variations of domain terms and, wherein each of the plurality of specification elements of the specification model comprises a plurality of properties, wherein the plurality of properties comprises an ID, a name, and a description.

3. The processor implemented method of claim 1, wherein the method of generating the specification model for each of the plurality of features using the specification extraction technique comprises:

receiving the plurality features and the plurality of requirement specification documents;

extracting a plurality of text content from the plurality of requirement specification documents by parsing the plurality of requirement specification documents using a document engine parsing technique;

generating a feature element corresponding to each of the plurality of features;

extracting a plurality of processes corresponding to each of the plurality of features based on a comparison between the plurality of text content and the plurality of process patterns;

generating a process element corresponding to each of the plurality of processes;

generating an association between each of a plurality of feature elements and each of a plurality of corresponding process elements;

extracting a plurality of subprocesses corresponding to each of the plurality of processes based on a comparison between the plurality of text content and the plurality of process patterns;

generating a subprocess element corresponding to each of the plurality of subprocesses;

13

generating an association between each of a plurality of process elements and each of a plurality of corresponding subprocess elements;

extracting a plurality of activities corresponding to each of the plurality of subprocesses based on a comparison between the plurality of text content and a plurality of activity patterns;

generating an activity element corresponding to each of the plurality of activities;

generating an association between each of a plurality of subprocess elements and each of a plurality of corresponding activity elements;

extracting a plurality of parameters corresponding to each of the plurality of activities based on a comparison between plurality of text content and a plurality of parameter patterns;

generating a parameter element corresponding to each of a plurality of parameters;

generating an association between each of a plurality of activity elements and each of the plurality of corresponding parameter elements;

extracting a plurality of rulesets corresponding to each of the plurality of features based on a comparison between plurality of text content and a plurality of ruleset patterns;

generating a plurality of ruleset elements corresponding to each of the plurality of rules sets;

generating an association between each of a plurality of process elements and each of the plurality of corresponding ruleset elements;

extracting a plurality of rules corresponding to each of the plurality of ruleset based on a comparison between the plurality of text content and a plurality of rule patterns;

generating a rule element for the plurality of rules; and

generating an association between the rule element and the corresponding ruleset element.

4. The processor implemented method of claim 1, wherein the method of generating the plurality of dependency associations for each of the plurality of specification elements based on the corresponding specification model using the dependency extraction technique comprises:

receiving the specification model corresponding to each of the plurality of features;

identifying the plurality of dependencies associated with each of the plurality of specification elements based on the corresponding plurality of properties using a dependency searching technique by:

preprocessing the description corresponding to each of the plurality of specification elements; and

obtaining the plurality of split sentences corresponding to the specification model by splitting the description of each of the plurality of specification elements.

5. The processor implemented method of claim 4, wherein the method of preprocessing comprises:

receiving the input data, wherein the input data is one of, the description corresponding to each of the plurality of specification elements and a plain text input from a user;

obtaining a parsed data by removing a plurality of stop words associated with the input data using a parsing technique;

obtaining a root form for each of a plurality of words associated with the parsed data using a Natural Language Processing, NLP, technique;

simultaneously identifying a plurality of dictionary terms from the parsed data; and

swapping each of the plurality of dictionary terms associated with the parsed data with a corresponding common name using the domain dictionary.

6. The processor implemented method of claim 1, further comprises generating an output report to the user, by:

receiving the plain text input from the user, wherein the plain text comprises a plurality natural language words;

preprocessing the plain text using the preprocessing technique;

obtaining a plurality of query parameters from the updated specification model using the plurality of matching techniques, wherein the query parameters comprises an intent and a feature hierarchy, wherein intent is at least one of a traceability and an impact analysis; and

generating the output report to the user based on the plurality of query parameters, wherein the output report comprises at least one of the traceability report and the impact analysis report.

7. A system (100) comprising:

at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive a plurality of requirement specification documents, a plurality of extraction patterns, and a domain dictionary;

generate a product feature model based on the plurality of requirement specification documents, the plurality of extraction patterns, and the domain dictionary, using a feature model generation technique, wherein the product feature model comprises a plurality of features elements arranged hierarchically, wherein the plurality of product feature elements comprises a feature area, a major feature, and a plurality of features;

generate a specification model for each of the plurality of features associated with the product feature model using a specification extraction technique, wherein the specification model comprises a plurality of specification elements and a plurality of corresponding associations, wherein the plurality of specification elements comprises a plurality of processes, a plurality of activities, a plurality of rulesets, a plurality of rules and a plurality of parameters;

identify a plurality of dependencies associated with each of the plurality of specification elements based on a plurality of split sentences using a plurality of matching techniques, wherein the plurality of matching techniques comprises the ID based exact matching, a name based exact matching, name based inexact matching and an indirect feature reference matching;

update the plurality of dependencies corresponding to each of the plurality of specification elements in the specification model by traversing the specification model, wherein the ID based exact matching technique compares the ID associated with each of the plurality of specification elements with the plurality of split sentences corresponding to each of the plurality of specification elements, wherein the name based exact matching technique compares the name associated with each of the plurality of specification elements with the plurality of split sentences corresponding to each of the plurality of specification elements by considering the ordering of words, wherein the name based inexact matching technique compares the name associated with each of the plurality of specification elements with the plurality of split sentences corresponding to each of the plurality of specification elements without considering the ordering of words, wherein the indirect feature reference matching technique compares preprocessed description with a plurality of referential words, wherein each of the plurality of referential words comprises a plurality of feature reference patterns and, wherein each of the plurality of feature reference patterns comprises a corresponding plurality of referencing styles, and wherein the name based inexact matching ignores ordering of words associated with the name of the specification element in the preprocessed description, wherein the indirect feature reference matching technique compares the plurality of split sentences corresponding to each of the plurality of specification elements with a plurality of feature referential words; and

generate a plurality of dependency associations for each of the plurality of specification elements based on the corresponding specification model using a dependency extraction technique.

8. The system of claim 7, wherein the plurality of extraction patterns comprises a process pattern, an activity pattern, a parameter pattern, a ruleset pattern and a rule pattern, wherein each of the plurality of extraction patterns comprises a corresponding plurality of document formatting styles and, wherein the domain dictionary comprises a plurality of taxonomical variations of domain terms and, wherein each of the plurality of specification elements of the specification model comprises a plurality of properties, wherein the plurality of properties comprises an ID, a name, and a description.

9. The system of claim 7, wherein the method of generating the specification model for each of the plurality of features using the specification extraction technique comprises:

receiving the plurality features and the plurality of requirement specification documents;

extracting a plurality of text content from the plurality of requirement specification documents by parsing the plurality of requirement specification documents using a document engine parsing technique;

generating a feature element corresponding to each of the plurality of features;

extracting a plurality of processes corresponding to each of the plurality of features based on a comparison between the plurality of text content and the plurality of process patterns;

generating a process element corresponding to each of the plurality of processes;

generating an association between each of a plurality of feature elements and each of a plurality of corresponding process elements;

extracting a plurality of subprocesses corresponding to each of the plurality of processes based on a comparison between the plurality of text content and the plurality of process patterns;

generating a subprocess element corresponding to each of the plurality of subprocesses;

generating an association between each of a plurality of process elements and each of a plurality of corresponding subprocess elements;

extracting a plurality of activities corresponding to each of the plurality of subprocesses based on a comparison between the plurality of text content and a plurality of activity patterns;

generating an activity element corresponding to each of the plurality of activities;

generating an association between each of a plurality of subprocess elements and each of a plurality of corresponding activity elements;

extracting a plurality of parameters corresponding to each of the plurality of activities based on a comparison between plurality of text content and a plurality of parameter patterns;

generating a parameter element corresponding to each of a plurality of parameters;

generating an association between each of a plurality of activity elements and each of the plurality of corresponding parameter elements;

extracting a plurality of rulesets corresponding to each of the plurality of features based on a comparison between plurality of text content and a plurality of ruleset patterns;

generating a plurality of ruleset elements corresponding to each of the plurality of rules sets;

generating an association between each of a plurality of process elements and each of the plurality of corresponding ruleset elements;

extracting a plurality of rules corresponding to each of the plurality of ruleset based on a comparison between the plurality of text content and a plurality of rule patterns;

generating a rule element for the plurality of rules; and

generating an association between the rule element and the corresponding ruleset element.

10. The system of claim 7, wherein the method of generating the plurality of dependency associations for each of the plurality of specification elements based on the corresponding specification model using the dependency extraction technique comprises:

receiving the specification model corresponding to each of the plurality of features;

identifying the plurality of dependencies associated with each of the plurality of specification elements based on the corresponding plurality of properties using a dependency searching technique by:

preprocessing the description corresponding to each of the plurality of specification elements;

obtaining the plurality of split sentences corresponding to the specification model by splitting the description of each of the plurality of specification elements; and

identifying the plurality of dependencies associated with each of the plurality of specification elements based on the plurality of split sentences using a plurality of matching techniques, wherein the plurality of matching techniques comprises the ID based exact matching, a name based exact matching, name based inexact matching and an indirect feature reference matching; and

updating the plurality of dependencies corresponding to each of the plurality of specification elements in the specification model by traversing the specification model.

11. The system of claim 10, wherein the method of preprocessing comprises:

receiving the input data, wherein the input data is one of, the description corresponding to each of the plurality of specification elements and a plain text input from a user;

obtaining a parsed data by removing a plurality of stop words associated with the input data using a parsing technique;

obtaining a root form for each of a plurality of words associated with the parsed data using a Natural Language Processing, NLP, technique;

simultaneously identifying a plurality of dictionary terms from the parsed data; and

swapping each of the plurality of dictionary terms associated with the parsed data with a corresponding common name using the domain dictionary.

12. The system of claim 7, further comprises generating an output report to the user, by:

receiving the plain text input from the user, wherein the plain text comprises a plurality natural language words;

preprocessing the plain text using the preprocessing technique;
obtaining a plurality of query parameters from the updated specification model using the plurality of matching techniques, wherein the query parameters comprises an intent and a feature hierarchy, wherein intent is at least one of a traceability and an impact analysis; and
generating the output report to the user based on the plurality of query parameters, wherein the output report comprises at least one of the traceability report and the impact analysis report.

13. One or more non-transitory machine-readable information storage mediums to carry out the steps of the method of claims 1-6.

**Patentansprüche**

1. Prozessorimplementiertes Verfahren (200), wobei das Verfahren umfasst:

Empfangen (202), durch einen oder mehrere Hardwareprozessoren, einer Mehrzahl von Anforderungsspezifikationsdokumenten, einer Mehrzahl von Extraktionsmustern und eines Domänenwörterbuchs;
Erzeugen (204), durch den einen oder die mehreren Hardwareprozessoren, eines Produktmerkmalsmodells basierend auf der Mehrzahl von Anforderungsspezifikationsdokumenten, der Mehrzahl von Extraktionsmustern und dem Domänenwörterbuch unter Verwendung einer Merkmalsmodellerzeugungstechnik, wobei das Produktmerkmalsmodell eine Mehrzahl von Merkmalselementen umfasst, die hierarchisch angeordnet sind, wobei die Mehrzahl von Produktmerkmalselementen einen Merkmalsbereich, ein Hauptmerkmal und eine Mehrzahl von Merkmalen umfasst;
Erzeugen (206), durch den einen oder die mehreren Hardwareprozessoren, eines Spezifikationsmodells für jedes der Mehrzahl von Merkmalen, die dem Produktmerkmalsmodell zugeordnet sind, unter Verwendung einer Spezifikationsextraktionstechnik, wobei das Spezifikationsmodell eine Mehrzahl von Spezifikationselementen und eine Mehrzahl von entsprechenden Zuordnungen umfasst, wobei die Mehrzahl von Spezifikationselementen eine Mehrzahl von Prozessen, eine Mehrzahl von Aktivitäten, eine Mehrzahl von Regelsätzen, eine Mehrzahl von Regeln und eine Mehrzahl von Parametern umfasst;
Identifizieren, durch den einen oder die mehreren Hardwareprozessoren, einer Mehrzahl von Abhängigkeiten, die jedem der Mehrzahl von Spezifikationselementen zugeordnet sind, basierend auf einer Mehrzahl von geteilten Sätzen unter Verwendung einer Mehrzahl von Abgleichtechniken, wobei die Mehrzahl von Abgleichtechniken den IDbasierten genauen Abgleich, einen namenbasierten genauen Abgleich, einen namenbasierten ungenauen Abgleich und einen indirekten Merkmalsreferenzabgleich umfasst;
Aktualisieren, durch den einen oder die mehreren Hardwareprozessoren, der Mehrzahl von Abhängigkeiten, die jedem der Mehrzahl von Spezifikationselementen in dem Spezifikationsmodell entsprechen, durch Durchlaufen des Spezifikationsmodells, wobei die IDbasierte genaue Abgleichtechnik die ID, die jedem der Mehrzahl von Spezifikationselementen zugeordnet ist, mit der Mehrzahl von geteilten Sätzen vergleicht, die jedem der Mehrzahl von Spezifikationselementen entsprechen, wobei die namenbasierte genaue Abgleichtechnik den Namen, der jedem der Mehrzahl von Spezifikationselementen zugeordnet ist, mit der Mehrzahl von geteilten Sätzen vergleicht, die jedem der Mehrzahl von Spezifikationselementen entsprechen, indem die Reihenfolge von Wörtern berücksichtigt wird, wobei die namenbasierte ungenaue Abgleichtechnik den Namen, der jedem der Mehrzahl von Spezifikationselementen zugeordnet ist, mit der Mehrzahl von geteilten Sätzen vergleicht, die jedem der Mehrzahl von Spezifikationselementen entsprechen, ohne die Reihenfolge von Wörtern zu berücksichtigen, wobei die indirekte Merkmalsreferenzabgleichtechnik eine vorverarbeitete Beschreibung mit einer Mehrzahl von Referenzwörtern vergleicht, wobei jedes der Mehrzahl von Referenzwörtern eine Mehrzahl von Merkmalsreferenzmustern umfasst und wobei jedes der Mehrzahl von Merkmalsreferenzmustern eine entsprechende Mehrzahl von Referenzstilen umfasst und wobei der namenbasierte ungenaue Abgleich die Reihenfolge von Wörtern ignoriert, die dem Namen des Spezifikationselements in der vorverarbeiteten Beschreibung zugeordnet sind, wobei die indirekte Merkmalsreferenzabgleichtechnik die Mehrzahl von geteilten Sätzen, die jedem der Mehrzahl von Spezifikationselementen entsprechen, mit einer Mehrzahl von Merkmalsreferenzwörtern vergleicht; und
Erzeugen (208), durch den einen oder die mehreren Hardwareprozessoren, einer Mehrzahl von Abhängigkeitszuordnungen für jedes der Mehrzahl von Spezifikationselementen basierend auf dem entsprechenden Spezifikationsmodell unter Verwendung einer Abhängigkeitsextraktionstechnik.

2. Prozessorimplementiertes Verfahren nach Anspruch 1, wobei die Mehrzahl von Extraktionsmustern ein Prozessmuster, ein Aktivitätsmuster, ein Parametermuster, ein Regelsatzmuster und ein Regelmuster umfasst, wobei jedes der Mehrzahl von Extraktionsmustern eine entsprechende Mehrzahl von Dokumentformatierungsstilen umfasst und wobei das Domänenwörterbuch eine Mehrzahl von taxonomischen Variationen von Domänenbegriffen umfasst und wobei jedes der Mehrzahl von Spezifikationselementen des Spezifikationsmodells eine Mehrzahl von Eigenschaften umfasst, wobei die Mehrzahl von Eigenschaften eine ID, einen Namen und eine Beschreibung umfasst.

3. Prozessorimplementiertes Verfahren nach Anspruch 1, wobei das Verfahren zum Erzeugen des Spezifikationsmodells für jedes der Mehrzahl von Merkmalen unter Verwendung der Spezifikationsextraktionstechnik umfasst:

Empfangen der Mehrzahl von Merkmalen und der Mehrzahl von Anforderungsspezifikationsdokumenten;
Extrahieren einer Mehrzahl von Textinhalten aus der Mehrzahl von Anforderungsspezifikationsdokumenten durch Parsen der Mehrzahl von Anforderungsspezifikationsdokumenten unter Verwendung einer Dokumentenmaschinen-Parsing-Technik;
Erzeugen eines Merkmalselements, das jedem der Mehrzahl von Merkmalen entspricht;
Extrahieren einer Mehrzahl von Prozessen, die jedem der Mehrzahl von Merkmalen entsprechen, basierend auf einem Vergleich zwischen der Mehrzahl von Textinhalten und der Mehrzahl von Prozessmustern;
Erzeugen eines Prozesselements, das jedem der Mehrzahl von Prozessen entspricht;
Erzeugen einer Assoziation zwischen jedem einer Mehrzahl von Merkmalselementen und jedem einer Mehrzahl von entsprechenden Prozesselementen;
Extrahieren einer Mehrzahl von Teilprozessen, die jedem der Mehrzahl von Prozessen entsprechen, basierend auf einem Vergleich zwischen der Mehrzahl von Textinhalten und der Mehrzahl von Prozessmustern;
Erzeugen eines Teilprozesselements, das jedem der Mehrzahl von Teilprozessen entspricht;
Erzeugen einer Assoziation zwischen jedem einer Mehrzahl von Prozesselementen und jedem einer Mehrzahl von entsprechenden Teilprozesselementen;
Extrahieren einer Mehrzahl von Aktivitäten, die jedem der Mehrzahl von Teilprozessen entsprechen, basierend auf einem Vergleich zwischen der Mehrzahl von Textinhalten und einer Mehrzahl von Aktivitätsmustern;
Erzeugen eines Aktivitätselements, das jeder der Mehrzahl von Aktivitäten entspricht;
Erzeugen einer Assoziation zwischen jedem einer Mehrzahl von Teilprozesselementen und jedem einer Mehrzahl von entsprechenden Aktivitätselementen;
Extrahieren einer Mehrzahl von Parametern, die jeder der Mehrzahl von Aktivitäten entsprechen, basierend auf einem Vergleich zwischen einer Mehrzahl von Textinhalten und einer Mehrzahl von Parametermustern;
Erzeugen eines Parameterelements, das jedem einer Mehrzahl von Parametern entspricht;
Erzeugen einer Assoziation zwischen jedem einer Mehrzahl von Aktivitätselementen und jedem der Mehrzahl von entsprechenden Parameterelementen;
Extrahieren einer Mehrzahl von Regelsätzen, die jedem der Mehrzahl von Merkmalen entsprechen, basierend auf einem Vergleich zwischen einer Mehrzahl von Textinhalten und einer Mehrzahl von Regelsatzmustern;
Erzeugen einer Mehrzahl von Regelsatzelementen, die jedem der Mehrzahl von Regelsätzen entsprechen;
Erzeugen einer Assoziation zwischen jedem einer Mehrzahl von Prozesselementen und jedem der Mehrzahl von entsprechenden Regelsatzelementen;
Extrahieren einer Mehrzahl von Regeln, die jedem der Mehrzahl von Regelsätzen entsprechen, basierend auf einem Vergleich zwischen der Mehrzahl von Textinhalten und einer Mehrzahl von Regelmustern;
Erzeugen eines Regelelements für die Mehrzahl von Regeln; und
Erzeugen einer Assoziation zwischen dem Regelelement und dem entsprechenden Regelsatzelement.

4. Prozessorimplementiertes Verfahren nach Anspruch 1, wobei das Verfahren zum Erzeugen der Mehrzahl von Abhängigkeitszuordnungen für jedes der Mehrzahl von Spezifikationselementen basierend auf dem entsprechenden Spezifikationsmodell unter Verwendung der Abhängigkeitsextraktionstechnik umfasst:

Empfangen des Spezifikationsmodells, das jedem der Mehrzahl von Merkmalen entspricht;
Identifizieren der Mehrzahl von Abhängigkeiten, die jedem der Mehrzahl von Spezifikationselementen zugeordnet sind, basierend auf der entsprechenden Mehrzahl von Eigenschaften unter Verwendung einer Abhängigkeitssuchtechnik durch:

Vorverarbeiten der Beschreibung, die jedem der Mehrzahl von Spezifikationselementen entspricht; und
Erhalten der Mehrzahl von aufgeteilten Sätzen, die dem Spezifikationsmodell entsprechen, durch Aufteilen der Beschreibung jedes der Mehrzahl von Spezifikationselementen.

5. Prozessorimplementiertes Verfahren nach Anspruch 4, wobei das Verfahren zum Vorverarbeiten umfasst:

Empfangen der Eingabedaten, wobei die Eingabedaten eines von der Beschreibung, die jedem der Mehrzahl von Spezifikationselementen entspricht, und einer Klartexteingabe von einem Benutzer sind;

Erhalten von geparsten Daten durch Entfernen einer Mehrzahl von Stoppwörtern, die den Eingabedaten zugeordnet sind, unter Verwendung einer Parsing-Technik;

Erhalten einer Wurzelform für jedes einer Mehrzahl von Wörtern, die den geparsten Daten zugeordnet sind, unter Verwendung einer Natural Language Processing-, NLP-, Technik;

gleichzeitiges Identifizieren einer Mehrzahl von Wörterbuchbegriffen aus den geparsten Daten; und

Austauschen jedes der Mehrzahl von Wörterbuchbegriffen, die den geparsten Daten zugeordnet sind, mit einem entsprechenden gemeinsamen Namen unter Verwendung des Domänenwörterbuchs.

6. Prozessorimplementiertes Verfahren nach Anspruch 1, ferner umfassend Erzeugen eines Ausgabeberichts an den Benutzer durch:

Empfangen der Klartexteingabe von dem Benutzer, wobei der Klartext eine Mehrzahl von Wörtern natürlicher Sprache umfasst;

Vorverarbeiten des Klartexts unter Verwendung der Vorverarbeitungstechnik;

Erhalten einer Mehrzahl von Abfrageparametern aus dem aktualisierten Spezifikationsmodell unter Verwendung der Mehrzahl von Abgleichtechniken, wobei die Abfrageparameter eine Absicht und eine Merkmalshierarchie umfassen, wobei die Absicht mindestens eine von einer Rückverfolgbarkeit und einer Auswirkungsanalyse ist; und

Erzeugen des Ausgabeberichts an den Benutzer basierend auf der Mehrzahl von Abfrageparametern, wobei der Ausgabebericht mindestens einen von dem Rückverfolgbarkeitsbericht und dem Auswirkungsanalysebericht umfasst.

7. System (100), umfassend:

mindestens einen Speicher (104), der programmierte Anweisungen speichert; eine oder mehrere Eingabe/Ausgabe(E/A)-Schnittstellen (112); und einen oder mehrere Hardwareprozessoren (102), die betriebsfähig mit dem mindestens einen Speicher (104) gekoppelt sind, wobei der eine oder die mehreren Hardwareprozessoren (102) durch die programmierten Anweisungen konfiguriert sind zum:

Empfangen einer Mehrzahl von Anforderungsspezifikationsdokumenten, einer Mehrzahl von Extraktionsmustern und eines Domänenwörterbuchs;

Erzeugen eines Produktmerkmalsmodells basierend auf der Mehrzahl von Anforderungsspezifikationsdokumenten, der Mehrzahl von Extraktionsmustern und dem Domänenwörterbuch unter Verwendung einer Merkmalsmodellerzeugungstechnik, wobei das Produktmerkmalsmodell eine Mehrzahl von Merkmalselementen umfasst, die hierarchisch angeordnet sind, wobei die Mehrzahl von Produktmerkmalselementen einen Merkmalsbereich, ein Hauptmerkmal und eine Mehrzahl von Merkmalen umfasst;

Erzeugen eines Spezifikationsmodells für jedes der Mehrzahl von Merkmalen, die dem Produktmerkmalsmodell zugeordnet sind, unter Verwendung einer Spezifikationsextraktionstechnik, wobei das Spezifikationsmodell eine Mehrzahl von Spezifikationselementen und eine Mehrzahl von entsprechenden Zuordnungen umfasst, wobei die Mehrzahl von Spezifikationselementen eine Mehrzahl von Prozessen, eine Mehrzahl von Aktivitäten, eine Mehrzahl von Regelsätzen, eine Mehrzahl von Regeln und eine Mehrzahl von Parametern umfasst;

Identifizieren einer Mehrzahl von Abhängigkeiten, die jedem der Mehrzahl von Spezifikationselementen zugeordnet sind, basierend auf einer Mehrzahl von geteilten Sätzen unter Verwendung einer Mehrzahl von Abgleichtechniken, wobei die Mehrzahl von Abgleichtechniken den IDbasierten genauen Abgleich, einen namenbasierten genauen Abgleich, einen namenbasierten ungenauen Abgleich und einen indirekten Merkmalsreferenzabgleich umfasst;

Aktualisieren der Mehrzahl von Abhängigkeiten, die jedem der Mehrzahl von Spezifikationselementen in dem Spezifikationsmodell entsprechen, durch Durchlaufen des Spezifikationsmodells, wobei die IDbasierte genaue Abgleichtechnik die ID, die jedem der Mehrzahl von Spezifikationselementen zugeordnet ist, mit der Mehrzahl von geteilten Sätzen vergleicht, die jedem der Mehrzahl von Spezifikationselementen entsprechen, wobei die namenbasierte genaue Abgleichtechnik den Namen, der jedem der Mehrzahl von Spezifikationselementen zugeordnet ist, mit der Mehrzahl von geteilten Sätzen vergleicht, die jedem der Mehrzahl von Spezifikationselementen entsprechen, durch Berücksichtigen der Reihenfolge von Wörtern, wobei die namenbasierte ungenaue Abgleichtechnik den Namen, der jedem der Mehrzahl von Spezifikationselementen zugeordnet ist, mit der Mehrzahl von geteilten Sätzen vergleicht, die jedem der Mehrzahl von Spezifikationselementen entsprechen, ohne die Reihenfolge von Wörtern zu berücksichtigen, wobei die indirekte Merkmalsreferenzabgleichtechnik eine vorverarbeitete Beschreibung mit einer Mehrzahl von Referenzwörtern vergleicht, wobei jedes der Mehrzahl von Referenzwörtern eine Mehrzahl von Merkmalsreferenzmustern umfasst und wobei jedes der Mehrzahl von Merkmalsreferenzmustern eine entsprechende Mehrzahl von Referenzstilen umfasst und wobei der namenbasierte ungenaue Abgleich die Reihenfolge von Wörtern ignoriert, die dem Namen des Spezifikationselements in der vorverarbeiteten Beschreibung zugeordnet sind, wobei die indirekte Merkmalsreferenzabgleichtechnik die Mehrzahl von geteilten Sätzen, die jedem der Mehrzahl von Spezifikationselementen entsprechen, mit einer Mehrzahl von Merkmalsreferenzwörtern vergleicht; und

Erzeugen einer Mehrzahl von Abhängigkeitszuordnungen für jedes der Mehrzahl von Spezifikationselementen basierend auf dem entsprechenden Spezifikationsmodell unter Verwendung einer Abhängigkeitsextraktionstechnik.

8. System nach Anspruch 7, wobei die Mehrzahl von Extraktionsmustern ein Prozessmuster, ein Aktivitätsmuster, ein Parametermuster, ein Regelsatzmuster und ein Regelmuster umfasst, wobei jedes der Mehrzahl von Extraktionsmustern eine entsprechende Mehrzahl von Dokumentformatierungsstilen umfasst und wobei das Domänenwörterbuch eine Mehrzahl von taxonomischen Variationen von Domänenbegriffen umfasst und wobei jedes der Mehrzahl von Spezifikationselementen des Spezifikationsmodells eine Mehrzahl von Eigenschaften umfasst, wobei die Mehrzahl von Eigenschaften eine ID, einen Namen und eine Beschreibung umfasst.

9. System nach Anspruch 7, wobei das Verfahren zum Erzeugen des Spezifikationsmodells für jedes der Mehrzahl von Merkmalen unter Verwendung der Spezifikationsextraktionstechnik umfasst:

Empfangen der Mehrzahl von Merkmalen und der Mehrzahl von Anforderungsspezifikationsdokumenten;

Extrahieren einer Mehrzahl von Textinhalten aus der Mehrzahl von Anforderungsspezifikationsdokumenten durch Parsen der Mehrzahl von Anforderungsspezifikationsdokumenten unter Verwendung einer Dokumentenmaschinen-Parsing-Technik;

Erzeugen eines Merkmalselements, das jedem der Mehrzahl von Merkmalen entspricht;

Extrahieren einer Mehrzahl von Prozessen, die jedem der Mehrzahl von Merkmalen entsprechen, basierend auf einem Vergleich zwischen der Mehrzahl von Textinhalten und der Mehrzahl von Prozessmustern;

Erzeugen eines Prozesselements, das jedem der Mehrzahl von Prozessen entspricht;

Erzeugen einer Assoziation zwischen jedem einer Mehrzahl von Merkmalselementen und jedem einer Mehrzahl von entsprechenden Prozesselementen;

Extrahieren einer Mehrzahl von Teilprozessen, die jedem der Mehrzahl von Prozessen entsprechen, basierend auf einem Vergleich zwischen der Mehrzahl von Textinhalten und der Mehrzahl von Prozessmustern;

Erzeugen eines Teilprozesselements, das jedem der Mehrzahl von Teilprozessen entspricht;

Erzeugen einer Assoziation zwischen jedem einer Mehrzahl von Prozesselementen und jedem einer Mehrzahl von entsprechenden Teilprozesselementen;

Extrahieren einer Mehrzahl von Aktivitäten, die jedem der Mehrzahl von Teilprozessen entsprechen, basierend auf einem Vergleich zwischen der Mehrzahl von Textinhalten und einer Mehrzahl von Aktivitätsmustern;

Erzeugen eines Aktivitätselements, das jeder der Mehrzahl von Aktivitäten entspricht;

Erzeugen einer Assoziation zwischen jedem einer Mehrzahl von Teilprozesselementen und jedem einer Mehrzahl von entsprechenden Aktivitätselementen;

Extrahieren einer Mehrzahl von Parametern, die jeder der Mehrzahl von Aktivitäten entsprechen, basierend auf einem Vergleich zwischen einer Mehrzahl von Textinhalten und einer Mehrzahl von Parametermustern;

Erzeugen eines Parameterelements, das jedem einer Mehrzahl von Parametern entspricht;

Erzeugen einer Assoziation zwischen jedem einer Mehrzahl von Aktivitätselementen und jedem der Mehrzahl von entsprechenden Parameterelementen;

Extrahieren einer Mehrzahl von Regelsätzen, die jedem der Mehrzahl von Merkmalen entsprechen, basierend auf einem Vergleich zwischen einer Mehrzahl von Textinhalten und einer Mehrzahl von Regelsatzmustern;

Erzeugen einer Mehrzahl von Regelsatzelementen, die jedem der Mehrzahl von Regelsätzen entsprechen;

Erzeugen einer Assoziation zwischen jedem einer Mehrzahl von Prozesselementen und jedem der Mehrzahl von entsprechenden Regelsatzelementen;

Extrahieren einer Mehrzahl von Regeln, die jedem der Mehrzahl von Regelsätzen entsprechen, basierend auf einem Vergleich zwischen der Mehrzahl von Textinhalten und einer Mehrzahl von Regelmustern;

Erzeugen eines Regelelements für die Mehrzahl von Regeln; und

Erzeugen einer Assoziation zwischen dem Regelelement und dem entsprechenden Regelsatzelement.

10. System nach Anspruch 7, wobei das Verfahren zum Erzeugen der Mehrzahl von Abhängigkeitszuordnungen für jedes der Mehrzahl von Spezifikationselementen basierend auf dem entsprechenden Spezifikationsmodell unter Verwendung der Abhängigkeitsextraktionstechnik umfasst:

Empfangen des Spezifikationsmodells, das jedem der Mehrzahl von Merkmalen entspricht;
Identifizieren der Mehrzahl von Abhängigkeiten, die jedem der Mehrzahl von Spezifikationselementen zugeordnet sind, basierend auf der entsprechenden Mehrzahl von Eigenschaften unter Verwendung einer Abhängigkeitssuchtechnik durch:

Vorverarbeiten der Beschreibung, die jedem der Mehrzahl von Spezifikationselementen entspricht;
Erhalten der Mehrzahl von geteilten Sätzen, die dem Spezifikationsmodell entsprechen, durch Aufteilen der Beschreibung jedes der Mehrzahl von Spezifikationselementen; und
Identifizieren der Mehrzahl von Abhängigkeiten, die jedem der Mehrzahl von Spezifikationselementen zugeordnet sind, basierend auf der Mehrzahl von geteilten Sätzen unter Verwendung einer Mehrzahl von Abgleichtechniken, wobei die Mehrzahl von Abgleichtechniken den ID-basierten genauen Abgleich, einen namenbasierten genauen Abgleich, einen namenbasierten ungenauen Abgleich und einen indirekten Merkmalsreferenzabgleich umfasst; und

Aktualisieren der Mehrzahl von Abhängigkeiten, die jedem der Mehrzahl von Spezifikationselementen in dem Spezifikationsmodell entsprechen, durch Durchlaufen des Spezifikationsmodells.

**11.** System nach Anspruch 10, wobei das Verfahren zum Vorverarbeiten umfasst:

Empfangen der Eingabedaten, wobei die Eingabedaten eines von der Beschreibung, die jedem der Mehrzahl von Spezifikationselementen entspricht, und einer Klartexteingabe von einem Benutzer sind;
Erhalten von geparsten Daten durch Entfernen einer Mehrzahl von Stoppwörtern, die den Eingabedaten zugeordnet sind, unter Verwendung einer Parsing-Technik;
Erhalten einer Wurzelform für jedes einer Mehrzahl von Wörtern, die den geparsten Daten zugeordnet sind, unter Verwendung einer Natural Language Processing-, NLP-, Technik;
gleichzeitiges Identifizieren einer Mehrzahl von Wörterbuchbegriffen aus den geparsten Daten; und
Austauschen jedes der Mehrzahl von Wörterbuchbegriffen, die den geparsten Daten zugeordnet sind, mit einem entsprechenden gemeinsamen Namen unter Verwendung des Domänenwörterbuchs.

**12.** System nach Anspruch 7, ferner umfassend Erzeugen eines Ausgabeberichts an den Benutzer durch:

Empfangen der Klartexteingabe von dem Benutzer, wobei der Klartext eine Mehrzahl von Wörtern natürlicher Sprache umfasst;
Vorverarbeiten des Klartexts unter Verwendung der Vorverarbeitungstechnik;
Erhalten einer Mehrzahl von Abfrageparametern aus dem aktualisierten Spezifikationsmodell unter Verwendung der Mehrzahl von Abgleichtechniken, wobei die Abfrageparameter eine Absicht und eine Merkmalshierarchie umfassen, wobei die Absicht mindestens eine von einer Rückverfolgbarkeit und einer Auswirkungsanalyse ist; und
Erzeugen des Ausgabeberichts an den Benutzer basierend auf der Mehrzahl von Abfrageparametern, wobei der Ausgabebericht mindestens einen von dem Rückverfolgbarkeitsbericht und dem Auswirkungsanalysebericht umfasst.

**13.** Ein oder mehrere nichtflüchtige maschinenlesbare Informationsspeichermedien zum Ausführen der Schritte des Verfahrens nach den Ansprüchen 1-6.

**Revendications**

**1.** Procédé mis en œuvre par processeur (200), le procédé comprenant :

la réception (202), par un ou plusieurs processeurs matériels, d'une pluralité de documents de spécification d'exigence, d'une pluralité de modèles d'extraction, et d'un dictionnaire de domaine ;
la génération (204), par les un ou plusieurs processeurs matériels, d'un modèle de caractéristique de produit sur la base de la pluralité de documents de spécification d'exigence, de la pluralité de modèles d'extraction, et du dictionnaire de domaine, en utilisant une technique de génération de modèle de caractéristique, dans lequel le modèle de caractéristique de produit comprend une pluralité d'éléments de caractéristique agencés hiérarchiquement, dans lequel la pluralité d'éléments de caractéristique de produit comprend une zone de caractéristique, une caractéristique majeure, et une pluralité de caractéristiques ;

la génération (206), par les un ou plusieurs processeurs matériels, d'un modèle de spécification pour chacune de la pluralité de caractéristiques associées au modèle de caractéristique de produit en utilisant une technique d'extraction de spécification, dans lequel le modèle de spécification comprend une pluralité d'éléments de spécification et une pluralité d'associations correspondantes, dans lequel la pluralité d'éléments de spécification comprend une pluralité de processus, une pluralité d'activités, une pluralité d'ensembles de règles, une pluralité de règles et une pluralité de paramètres ;

l'identification, par les un ou plusieurs processeurs matériels, d'une pluralité de dépendances associées à chacun de la pluralité d'éléments de spécification sur la base d'une pluralité de phrases fractionnées en utilisant une pluralité de techniques de correspondance, dans lequel la pluralité de techniques de correspondance comprend la correspondance exacte basée sur l'ID, une correspondance exacte basée sur le nom, une correspondance inexacte basée sur le nom et une correspondance de référence de caractéristique indirecte ;

la mise à jour, par les un ou plusieurs processeurs matériels, de la pluralité de dépendances correspondant à chacun de la pluralité d'éléments de spécification dans le modèle de spécification en traversant le modèle de spécification, dans lequel la technique de correspondance exacte basée sur l'ID compare l'ID associé à chacun de la pluralité d'éléments de spécification à la pluralité de phrases fractionnées correspondant à chacun de la pluralité d'éléments de spécification, dans lequel la technique de correspondance exacte basée sur le nom compare le nom associé à chacun de la pluralité d'éléments de spécification à la pluralité de phrases fractionnées correspondant à chacun de la pluralité d'éléments de spécification en considérant l'ordre des mots, dans lequel la technique de correspondance inexacte basée sur le nom compare le nom associé à chacun de la pluralité d'éléments de spécification à la pluralité de phrases fractionnées correspondant à chacun de la pluralité d'éléments de spécification sans considérer l'ordre des mots, dans lequel la technique de correspondance de référence de caractéristique indirecte compare la description prétraitée à une pluralité de mots de référence, dans lequel chacun de la pluralité de mots de référence comprend une pluralité de motifs de référence de caractéristique, et dans lequel chacun de la pluralité de motifs de référence de caractéristique comprend une pluralité correspondante de styles de référencement, et dans lequel la correspondance inexacte basée sur le nom ignore l'ordre des mots associés au nom de l'élément de spécification dans la description prétraitée, dans lequel la technique de correspondance de référence de caractéristique indirecte compare la pluralité de phrases fractionnées correspondant à chacun de la pluralité d'éléments de spécification à une pluralité de mots de référence de caractéristique ; et

la génération (208), par les un ou plusieurs processeurs matériels, d'une pluralité d'associations de dépendance pour chacun de la pluralité d'éléments de spécification sur la base du modèle de spécification correspondant en utilisant une technique d'extraction de dépendance.

2. Procédé mis en œuvre par processeur selon la revendication 1, dans lequel la pluralité de modèles d'extraction comprend un modèle de processus, un modèle d'activité, un modèle de paramètre, un modèle d'ensemble de règles et un modèle de règle, dans lequel chacun de la pluralité de modèles d'extraction comprend une pluralité correspondante de styles de formatage de document, et dans lequel le dictionnaire de domaine comprend une pluralité de variations taxonomiques de termes de domaine, et dans lequel chacun de la pluralité d'éléments de spécification du modèle de spécification comprend une pluralité de propriétés, dans lequel la pluralité de propriétés comprend un ID, un nom, et une description.

3. Procédé mis en œuvre par processeur selon la revendication 1, dans lequel le procédé de génération du modèle de spécification pour chacune de la pluralité de caractéristiques en utilisant la technique d'extraction de spécification comprend :

la réception de la pluralité de caractéristiques et de la pluralité de documents de spécification d'exigence ;

l'extraction d'une pluralité de contenus de texte à partir de la pluralité de documents de spécification d'exigence en analysant la pluralité de documents de spécification d'exigence en utilisant une technique d'analyse de moteur de document ;

la génération d'un élément de caractéristique correspondant à chacune de la pluralité de caractéristiques ;

l'extraction d'une pluralité de processus correspondant à chacune de la pluralité de caractéristiques sur la base d'une comparaison entre la pluralité de contenus de texte et la pluralité de modèles de processus ;

la génération d'un élément de processus correspondant à chacun de la pluralité de processus ;

la génération d'une association entre chacun d'une pluralité d'éléments de caractéristique et chacun d'une pluralité d'éléments de processus correspondants ;

l'extraction d'une pluralité de sous-processus correspondant à chacun de la pluralité de processus sur la base d'une comparaison entre la pluralité de contenus de texte et la pluralité de modèles de processus ;

la génération d'un élément de sous-processus correspondant à chacun de la pluralité de sous-processus ;

la génération d'une association entre chacun d'une pluralité d'éléments de processus et chacun d'une pluralité d'éléments de sous-processus correspondants ;

l'extraction d'une pluralité d'activités correspondant à chacun de la pluralité de sous-processus sur la base d'une comparaison entre la pluralité de contenus de texte et une pluralité de modèles d'activité ;

la génération d'un élément d'activité correspondant à chacune de la pluralité d'activités ;

la génération d'une association entre chacun d'une pluralité d'éléments de sous-processus et chacun d'une pluralité d'éléments d'activité correspondants ;

l'extraction d'une pluralité de paramètres correspondant à chacune de la pluralité d'activités sur la base d'une comparaison entre une pluralité de contenus de texte et une pluralité de modèles de paramètres ;

la génération d'un élément de paramètre correspondant à chacun d'une pluralité de paramètres ;

la génération d'une association entre chacun d'une pluralité d'éléments d'activité et chacun de la pluralité d'éléments de paramètre correspondants ;

l'extraction d'une pluralité d'ensembles de règles correspondant à chacune de la pluralité de caractéristiques sur la base d'une comparaison entre une pluralité de contenus de texte et une pluralité de modèles d'ensemble de règles ;

la génération d'une pluralité d'éléments d'ensemble de règles correspondant à chacun de la pluralité d'ensembles de règles ;

la génération d'une association entre chacun d'une pluralité d'éléments de processus et chacun de la pluralité d'éléments d'ensemble de règles correspondants ;

l'extraction d'une pluralité de règles correspondant à chacun de la pluralité d'ensembles de règles sur la base d'une comparaison entre la pluralité de contenus de texte et une pluralité de modèles de règles ;

la génération d'un élément de règle pour la pluralité de règles ; et

la génération d'une association entre l'élément de règle et l'élément d'ensemble de règles correspondant.

4. Procédé mis en œuvre par processeur selon la revendication 1, dans lequel le procédé de génération de la pluralité d'associations de dépendance pour chacun de la pluralité d'éléments de spécification sur la base du modèle de spécification correspondant en utilisant la technique d'extraction de dépendance comprend :

la réception du modèle de spécification correspondant à chacune de la pluralité de caractéristiques ;

l'identification de la pluralité de dépendances associées à chacun de la pluralité d'éléments de spécification sur la base de la pluralité correspondante de propriétés en utilisant une technique de recherche de dépendance par :

le prétraitement de la description correspondant à chacun de la pluralité d'éléments de spécification ; et

l'obtention de la pluralité de phrases fractionnées correspondant au modèle de spécification en fractionnant la description de chacun de la pluralité d'éléments de spécification.

5. Procédé mis en œuvre par processeur selon la revendication 4, dans lequel le procédé de prétraitement comprend :

la réception des données d'entrée, dans lequel les données d'entrée sont l'une parmi la description correspondant à chacun de la pluralité d'éléments de spécification et une entrée de texte brut provenant d'un utilisateur ;

l'obtention de données analysées en supprimant une pluralité de mots d'arrêt associés aux données d'entrée en utilisant une technique d'analyse ;

l'obtention d'une forme racine pour chacun d'une pluralité de mots associés aux données analysées en utilisant une technique de traitement du langage naturel, NLP ;

l'identification simultanée d'une pluralité de termes de dictionnaire à partir des données analysées ; et

la permutation de chacun de la pluralité de termes de dictionnaire associés aux données analysées avec un nom commun correspondant en utilisant le dictionnaire de domaine.

6. Procédé mis en œuvre par processeur selon la revendication 1, comprenant en outre la génération d'un rapport de sortie à l'utilisateur, par :

la réception de l'entrée de texte brut provenant de l'utilisateur, dans lequel le texte brut comprend une pluralité de mots en langage naturel ;

le prétraitement du texte brut en utilisant la technique de prétraitement ;

l'obtention d'une pluralité de paramètres d'interrogation à partir du modèle de spécification mis à jour en utilisant la pluralité de techniques de mise en correspondance, dans lequel les paramètres d'interrogation comprennent une intention et une hiérarchie de caractéristiques, dans lequel l'intention est au moins l'une d'une traçabilité et d'une analyse d'impact ; et

la génération du rapport de sortie à l'utilisateur sur la base de la pluralité de paramètres d'interrogation, dans lequel le rapport de sortie comprend au moins l'un du rapport de traçabilité et du rapport d'analyse d'impact.

7. Système (100) comprenant :

au moins une mémoire (104) stockant des instructions programmées ; une ou plusieurs interfaces d'entrée/sortie (E/S) (112) ; et un ou plusieurs processeurs matériels (102) couplés de manière opérationnelle à l'au moins une mémoire (104), dans lequel les un ou plusieurs processeurs matériels (102) sont configurés par les instructions programmées pour :

recevoir une pluralité de documents de spécification d'exigence, une pluralité de modèles d'extraction, et un dictionnaire de domaine ;

générer un modèle de caractéristique de produit sur la base de la pluralité de documents de spécification d'exigence, de la pluralité de modèles d'extraction, et du dictionnaire de domaine, en utilisant une technique de génération de modèle de caractéristique, dans lequel le modèle de caractéristique de produit comprend une pluralité d'éléments de caractéristique agencés hiérarchiquement, dans lequel la pluralité d'éléments de caractéristique de produit comprend une zone de caractéristique, une caractéristique majeure, et une pluralité de caractéristiques ;

générer un modèle de spécification pour chacune de la pluralité de caractéristiques associées au modèle de caractéristique de produit en utilisant une technique d'extraction de spécification, dans lequel le modèle de spécification comprend une pluralité d'éléments de spécification et une pluralité d'associations correspondantes, dans lequel la pluralité d'éléments de spécification comprend une pluralité de processus, une pluralité d'activités, une pluralité d'ensembles de règles, une pluralité de règles et une pluralité de paramètres ;

identifier une pluralité de dépendances associées à chacun de la pluralité d'éléments de spécification sur la base d'une pluralité de phrases fractionnées en utilisant une pluralité de techniques de correspondance, dans lequel la pluralité de techniques de correspondance comprend la correspondance exacte basée sur l'ID, une correspondance exacte basée sur le nom, une correspondance inexacte basée sur le nom et une correspondance de référence de caractéristique indirecte ;

mettre à jour la pluralité de dépendances correspondant à chacun de la pluralité d'éléments de spécification dans le modèle de spécification en parcourant le modèle de spécification, dans lequel la technique de correspondance exacte basée sur l'ID compare l'ID associé à chacun de la pluralité d'éléments de spécification à la pluralité de phrases fractionnées correspondant à chacun de la pluralité d'éléments de spécification, dans lequel la technique de correspondance exacte basée sur le nom compare le nom associé à chacun de la pluralité d'éléments de spécification à la pluralité de phrases fractionnées correspondant à chacun de la pluralité d'éléments de spécification en considérant l'ordre des mots, dans lequel la technique de correspondance inexacte basée sur le nom compare le nom associé à chacun de la pluralité d'éléments de spécification à la pluralité de phrases fractionnées correspondant à chacun de la pluralité d'éléments de spécification sans considérer l'ordre des mots, dans lequel la technique de correspondance de référence de caractéristique indirecte compare la description prétraitée à une pluralité de mots de référence, dans lequel chacun de la pluralité de mots de référence comprend une pluralité de motifs de référence de caractéristique, et dans lequel chacun de la pluralité de motifs de référence de caractéristique comprend une pluralité correspondante de styles de référencement, et dans lequel la correspondance inexacte basée sur le nom ignore l'ordre des mots associés au nom de l'élément de spécification dans la description prétraitée, dans lequel la techniaue de correspondance de référence de caractéristiaue indirecte compare la pluralité de phrases fractionnées correspondant à chacun de la pluralité d'éléments de spécification à une pluralité de mots de référence de caractéristique ; et

générer une pluralité d'associations de dépendance pour chacun de la pluralité d'éléments de spécification sur la base du modèle de spécification correspondant en utilisant une technique d'extraction de dépendance.

8. Système selon la revendication 7, dans lequel la pluralité de modèles d'extraction comprend un modèle de processus, un modèle d'activité, un modèle de paramètre, un modèle d'ensemble de règles et un modèle de règle, dans lequel chacun de la pluralité de modèles d'extraction comprend une pluralité correspondante de styles de formatage de document, et dans lequel le dictionnaire de domaine comprend une pluralité de variations taxonomiques de termes de domaine, et dans lequel chacun de la pluralité d'éléments de spécification du modèle de spécification comprend une pluralité de propriétés, dans lequel la pluralité de propriétés comprend un ID, un nom, et une description.

9. Système selon la revendication 7, dans lequel le procédé de génération du modèle de spécification pour chacune de la pluralité de caractéristiques en utilisant la technique d'extraction de spécification comprend :

la réception de la pluralité de caractéristiques et de la pluralité de documents de spécification d'exigence ;

l'extraction d'une pluralité de contenus de texte à partir de la pluralité de documents de spécification d'exigence en analysant la pluralité de documents de spécification d'exigence en utilisant une technique d'analyse de moteur de document ;

la génération d'un élément de caractéristique correspondant à chacune de la pluralité de caractéristiques ;

l'extraction d'une pluralité de processus correspondant à chacune de la pluralité de caractéristiques sur la base d'une comparaison entre la pluralité de contenus de texte et la pluralité de modèles de processus ;

la génération d'un élément de processus correspondant à chacun de la pluralité de processus ;

la génération d'une association entre chacun d'une pluralité d'éléments de caractéristique et chacun d'une pluralité d'éléments de processus correspondants ;

l'extraction d'une pluralité de sous-processus correspondant à chacun de la pluralité de processus sur la base d'une comparaison entre la pluralité de contenus de texte et la pluralité de modèles de processus ;

la génération d'un élément de sous-processus correspondant à chacun de la pluralité de sous-processus ;

la génération d'une association entre chacun d'une pluralité d'éléments de processus et chacun d'une pluralité d'éléments de sous-processus correspondants ;

l'extraction d'une pluralité d'activités correspondant à chacun de la pluralité de sous-processus sur la base d'une comparaison entre la pluralité de contenus de texte et une pluralité de modèles d'activité ;

la génération d'un élément d'activité correspondant à chacune de la pluralité d'activités ;

la génération d'une association entre chacun d'une pluralité d'éléments de sous-processus et chacun d'une pluralité d'éléments d'activité correspondants ;

l'extraction d'une pluralité de paramètres correspondant à chacune de la pluralité d'activités sur la base d'une comparaison entre une pluralité de contenus de texte et une pluralité de modèles de paramètres ;

la génération d'un élément de paramètre correspondant à chacun d'une pluralité de paramètres ;

la génération d'une association entre chacun d'une pluralité d'éléments d'activité et chacun de la pluralité d'éléments de paramètre correspondants ;

l'extraction d'une pluralité d'ensembles de règles correspondant à chacune de la pluralité de caractéristiques sur la base d'une comparaison entre une pluralité de contenus de texte et une pluralité de modèles d'ensemble de règles ;

la génération d'une pluralité d'éléments d'ensemble de règles correspondant à chacun de la pluralité d'ensembles de règles ;

la génération d'une association entre chacun d'une pluralité d'éléments de processus et chacun de la pluralité d'éléments d'ensemble de règles correspondants ;

l'extraction d'une pluralité de règles correspondant à chacun de la pluralité d'ensembles de règles sur la base d'une comparaison entre la pluralité de contenus de texte et une pluralité de modèles de règles ;

la génération d'un élément de règle pour la pluralité de règles ; et

la génération d'une association entre l'élément de règle et l'élément d'ensemble de règles correspondant.

10. Système selon la revendication 7, dans lequel le procédé de génération de la pluralité d'associations de dépendance pour chacun de la pluralité d'éléments de spécification sur la base du modèle de spécification correspondant en utilisant la technique d'extraction de dépendance comprend :

la réception du modèle de spécification correspondant à chacune de la pluralité de caractéristiques ;

l'identification de la pluralité de dépendances associées à chacun de la pluralité d'éléments de spécification sur la base de la pluralité correspondante de propriétés en utilisant une technique de recherche de dépendance par :

le prétraitement de la description correspondant à chacun de la pluralité d'éléments de spécification ;

l'obtention de la pluralité de phrases fractionnées correspondant au modèle de spécification en fractionnant la description de chacun de la pluralité d'éléments de spécification ; et

l'identification de la pluralité de dépendances associées à chacun de la pluralité d'éléments de spécification sur la base de la pluralité de phrases fractionnées en utilisant une pluralité de techniques de correspondance, dans lequel la pluralité de techniques de correspondance comprend la correspondance exacte basée sur l'ID, une correspondance exacte basée sur le nom, une correspondance inexacte basée sur le nom et une correspondance de référence de caractéristique indirecte ; et

la mise à jour de la pluralité de dépendances correspondant à chacun de la pluralité d'éléments de spécification dans le modèle de spécification en parcourant le modèle de spécification.

11. Système selon la revendication 10, dans lequel le procédé de prétraitement comprend :

la réception des données d'entrée, dans lequel les données d'entrée sont l'une parmi la description correspondant à chacun de la pluralité d'éléments de spécification et une entrée de texte brut provenant d'un utilisateur ;
l'obtention de données analysées en supprimant une pluralité de mots d'arrêt associés aux données d'entrée en utilisant une technique d'analyse ;
l'obtention d'une forme racine pour chacun d'une pluralité de mots associés aux données analysées en utilisant une technique de traitement du langage naturel, NLP ;
l'identification simultanée d'une pluralité de termes de dictionnaire à partir des données analysées ; et
la permutation de chacun de la pluralité de termes de dictionnaire associés aux données analysées avec un nom commun correspondant en utilisant le dictionnaire de domaine.

**12.** Système selon la revendication 7, comprenant en outre la génération d'un rapport de sortie à l'utilisateur, par :

la réception de l'entrée de texte brut provenant de l'utilisateur, dans lequel le texte brut comprend une pluralité de mots en langage naturel ;
le prétraitement du texte brut en utilisant la technique de prétraitement ;
l'obtention d'une pluralité de paramètres d'interrogation à partir du modèle de spécification mis à jour en utilisant la pluralité de techniques de mise en correspondance, dans lequel les paramètres d'interrogation comprennent une intention et une hiérarchie de caractéristiques, dans lequel l'intention est au moins l'une d'une traçabilité et d'une analyse d'impact ; et
la génération du rapport de sortie à l'utilisateur sur la base de la pluralité de paramètres d'interrogation, dans lequel le rapport de sortie comprend au moins l'un du rapport de traçabilité et du rapport d'analyse d'impact.

**13.** Un ou plusieurs supports de stockage d'informations lisibles par machine non transitoires pour mettre en œuvre les étapes du procédé selon les revendications 1 à 6.

100

MEMORY 104

MODULES 106

REPOSITORY 110

108

I/O INTERFACE
112

HARDWARE
PROCESSORS
102

FIG. 1

200

| receive a plurality of requirement specification documents, a plurality of extraction patterns and a domain dictionary | 202 |

| generate a product feature model based on the plurality of requirement specification documents, the plurality of extraction patterns and the domain dictionary using a feature model generation technique, wherein the product feature model comprises a plurality of product feature elements arranged hierarchically, wherein each of the plurality of product feature elements comprises a feature area, a major feature, and a plurality of features | 204 |

| generate a specification model for each of the plurality of features using a specification extraction technique, wherein the specification model comprises a plurality of specification elements and a plurality of corresponding associations, wherein the plurality of specification elements comprises a plurality of processes, a plurality of activities, a plurality of rule sets, a plurality of rules and a plurality of parameters | 206 |

| generate a plurality of dependency associations for each of the plurality of specification elements based on the corresponding specification model using a dependency extraction technique | 208 |

| update the plurality of dependency associations in the corresponding specification model | 210 |

FIG. 2

300

302

Insurance

Product/sub
product

Feature area

Scheme
Administration

304

Major
feature

Scheme
Maintenance

306

Feature

308A

Feature

308B

Feature

308C

SCH_001:
Create New
Scheme

SCH_002:
Capture
Scheme Details

SCH_006:
Validate
Scheme Details

**FIG. 3**

Input data

Document engine parsing techniques | 402

Text content | 404

Feature element generation

Text content has Processes? — 406 — Yes → generate process/subprocesses elements and feature to process/subprocess associations | 408 → Text content has activities? | 410 — Yes → generate activity elements and process/subprocess to activity associations | 412

400

Text content has Processes? — No

Text content has activities? — No

Text content has Parameter? | 414 — Yes → generate parameter elements and activity to parameter element associations | 416

Text content has Parameter? — No

Text content has Rulesets? — Yes → generate RuleSet elements and RuleSet to process element associations | 420 → Create Rules and Associate Rule with RuleSet | 422

418

**FIG. 4**

FIG. 5A

FIG. 5B

600

featureDependsOnFeature

602

Feature

604

Rule

ruleInvokes
Process    0....*

606

Process

activityInvokes
Process   0....*

0....*

parameterComputedBy
Process

ruleInvokes
RuleSet

0....*

608

activityInvokes
Activity

Ruleset

0....*

0....*

610

Activity

activityInvokes
RuleSet

0....*

parameter
ValidatedBy
RuleSet

612

Parameter

**FIG. 6A**

620

Feature 622

MTR_003:
Validate
Maturity Claim

Process

MF5:
Validate
Claim
Main
Scenario 624

626A 626B

Ruleset Ruleset

BR2:Validate ** BR7:Validate **

Rules

Rule1: …
Rule2: … 628

activity
InvokesRuleSet

featureDependsOnFeature

630

Feature 632

MTR_001:
Capture
Maturity Details

Process

AF2:
Calculate
Scheme
Details 634

636

Activity

Act1: System calculates
the application scheme
details (AF2) after
performing validations
stated in BR2 of this use
case & BR2 and BR7 of
use case MTR_003
Maturity Claim. If any
validation fails, this use
case ends here.

Ruleset

BR1:Validate
initial details

Rules 640

Rule1: …
Rule2: …

638A

638B

BR2:Vali
dation
during
linking
the
scheme

Ruleset

**FIG. 6B**

34

**FIG. 6C**

EP 4 202 642 B1

FIG. 7

36

800

```
┌─────────────────────────────────────────────────────────────┐
│ receive a plain text input from a user, wherein the plain    │ ⟋ 802
│ text comprises a plurality natural language words             │
└─────────────────────────────────────────────────────────────┘
                            │
                            ▼
┌─────────────────────────────────────────────────────────────┐
│                                                               │ ⟋ 804
│ preprocessing the plain text using the preprocessing technique│
└─────────────────────────────────────────────────────────────┘
                            │
                            ▼
┌─────────────────────────────────────────────────────────────┐
│ obtain a plurality of query parameters from the updated       │
│ specification model using the plurality of matching           │ ⟋ 806
│ techniques, wherein the query parameters comprises an intent  │
│ and a feature hierarchy, wherein intent is at least one of a  │
│ traceability and an impact analysis                           │
└─────────────────────────────────────────────────────────────┘
                            │
                            ▼
┌─────────────────────────────────────────────────────────────┐
│ generate an output report to the user based on the plurality  │
│ of query parameters, wherein the output report comprises at   │ ⟋ 808
│ least one of the traceability report and the impact analysis  │
│ report                                                        │
└─────────────────────────────────────────────────────────────┘
```

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IN 202121059937

### Non-patent literature cited in the description

- **NILI ITZIK et al.** *Generating feature models from requirements*, 15 September 2014, vol. 20140915 (1077952576 - 1077952576), 44-51
- **ANJALI SREE-KUMAR et al.** Extracting software product line feature models from natural language specifications. *SYSTEMS AND SOFTWARE PRODUCT LINE, ACM, 2 PENN PLAZA*, 10 September 2018, 43-53
- iMER: Iterative process of entity relationship and business process model extraction from the requirements. **JAVED MUHAMMAD et al.** INFORMATION AND SOFTWARE TECHNOLOGY. ELSEVIER, 27 February 2021, vol. 135